(19) Europäisches Patentamt
European Patent Office
Office européen des brevets

(11) Publication number: 0 112 592 B1

(12) **EUROPEAN PATENT SPECIFICATION**

(45) Date of publication of patent specification: 23.08.89

(51) Int. Cl.$^4$: C 11 D 3/00, C 11 D 3/37, C 11 D 1/88

(21) Application number: 83201775.0

(22) Date of filing: 14.12.83

(54) **Zwitterionic polymers having clay soil removal/anti-redeposition properties useful in detergent compositions.**

(30) Priority: 23.12.82 US 452650

(43) Date of publication of application: 04.07.84 Bulletin 84/27

(45) Publication of the grant of the patent: 23.08.89 Bulletin 89/34

(84) Designated Contracting States: AT BE CH DE FR GB IT LI NL

(58) References cited:
US-A-3 836 537
US-A-3 925 262
US-A-3 929 678
US-A-4 301 044

(73) Proprietor: THE PROCTER & GAMBLE COMPANY
301 East Sixth Street
Cincinnati Ohio 45202 (US)

(72) Inventor: Gosselink, Eugene P.
3754 Susanna Drive
Cincinnati, Ohio 45239 (US)

(74) Representative: Ernst, Hubert et al
PROCTER & GAMBLE EUROPEAN TECHNICAL CENTER Temselaan 100
B-1820 Strombeek-Bever (BE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 112 592 B1

Courier Press, Leamington Spa, England.

## Description

Technical Field

The present application relates to zwitterionic polymers having clay-soil removal/anti-redeposition properties when used in detergent compositions.

A particularly important property of a detergent composition is its ability to remove particulate type soils from a variety of fabrics during laundering. Perhaps the most important particulate soils are the clay-type soils. Clay soil particles generally comprise negatively charged layers of aluminosilicates and positively charged cations (e.g. calcium) which are positioned between and hold together the negatively charged layers.

A variety of models can be proposed for compounds which would have clay soil removal properties. One model requires that the compound have two distinct characteristics. The first is the ability of the compound to adsorb onto the negatively charged layers of the clay particle. The second is the ability of the compound, once adsorbed, to push apart (swell) the negatively charged layers so that the clay particle loses its cohesive force and can be removed in the wash water.

One class of clay-soil removal compounds which appears to work according to this model are the polyethoxy zwitterionic surfactants disclosed in U.S. Patent 4,301,044 to Wentler et al., issued November 17, 1981. Representative of such compounds are those having the formula:

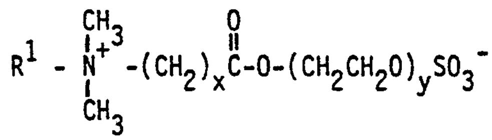

wherein $R^1$ is a $C_{14}$—$C_{20}$ alkyl group, x is 1 or an integer of from 3 to 5, and y is from 6 to 12. See also U.S. Patent 3,929,678 to Laughlin et al., issued December 30, 1975 (detergent composition containing polyethoxy zwitterionic surfactant plus other detergent surfactants); U.S. Patent 3,925,262 to Laughlin et al., issued December 9, 1975 (detergent composition containing polyethoxy zwitterionic surfactants with detergent builders); U.S. Patent 4,157,277 to Gosselink et al., issued June 26, 1979 ($C_4$ polyoxyalkylene zwitterionic surfactants useful in detergent compositions); U.S. Patent 4,165,334 to Gosselink et al., issued August 21, 1979 (sulfonium-type polyethoxy zwitterionic surfactants).

These polyethoxy zwitterionic surfactants are generally compatible with other detergent surfactants such as the nonionic, zwitterionic and ampholytic types. However, as suggested in the Wentler et al. patent, most anionic surfactants interfere with the particulate soil removal performance of these compounds; anionic soils such as fatty acids likewise interfere. Because anionic detergent surfactants form the most important class of such materials for use in detergent compositions, the lack of compatibility between these polyethoxy zwitterionic surfactants and anionic surfactants poses a significant handicap where particulate (clay) soil removal is desired.

In addition to clay soil removal, one of the other properties mentioned in the Laughlin et al. patents with regard to these polyethoxy zwitterionic surfactants is the ability to keep the removed soil in suspension during the laundering cycle. Soil which is removed from the fabric and suspended in the wash water can redeposit onto the surface of the fabric. This redeposited soil causes a dulling or "graying" effect which is especially noticeable on white fabrics. Because soil is normally hydrophobic, this graying effect is a particularly important problem for those fabrics made in total or in part from hydrophobic fibers, e.g. polyester.

To minimize this problem, anti-redeposition or whiteness maintenance agents can be included in the detergent composition. Besides the previously mentioned polyethoxy zwitterionic surfactants, there are a variety of other compounds which can be used as anti-redeposition agents. One class of agents are the water-soluble copolymers of acrylic or methacrylic acid with acrylic or methacrylic acid-ethylene oxide condensates disclosed in U.S. Patent 3,719,647 to Hardy et al., issued March 6, 1973. Another class of anti-redeposition agents are the cellulose and carboxymethylcellulose derivatives disclosed in U.S. Patent 3,597,416 to Diehl, issued August 3, 1971 (ionic combination of dodecyltrimethyl phosphonium chloride and sodium carboxymethylcellulose), and U.S. Patent 3,523,088 to Dean et al., issued August 4, 1970 (combination of alkali metal carboxymethylcellulose and hydroxypropylcellulose). A mixture of compounds has also been used to provide not only anti-redeposition, but also clay soil removal properties. See U.S. Patent 4,228,044 to Cambre, issued October 14, 1980, which discloses detergent compositions having anti-redeposition and clay soil removal properties which can comprise a nonionic alkyl polyethoxy surfactant, a polyethoxy alkyl quaternary cationic surfactant and a fatty amide surfactant.

These anti-redeposition agents do have a number of significant handicaps. While effective to keep soil suspended, these compounds may lack additional clay soil removal properties. Moreover, as disclosed in the Diehl and Dean et al. patents, mixtures of compounds can be required to achieve the anti-redeposition benefit. To the extent that there are combined anti-redeposition/clay soil removal benefits as disclosed in the Cambre patent, mixtures of compounds are also required.

It is therefore an object of the present invention to provide compounds useful in detergent compositions which provide particulate soil, especially clay soil, removal benefits.

It is a further object of the present invention to provide compounds useful in detergent compositions which provide clay soil removal benefits and are anionic detergent surfactant compatible.

It is yet another object of the present invention to provide compounds useful in detergent compositions having anti-redeposition properties.

It is yet a further object of the present invention to provide compounds useful in detergent compositions which combine both clay soil removal and anti-redeposition properties.

These and further objects of the present invention are hereinafter disclosed.

Background Art

U.S. Patent 3,671,305 to Brown et al. issued June 20, 1972, discloses zwitterionic monomers which form polymers used to treat films, sheets, and filamentary materials so as to give them a durable, hydrophilic, anti-static, anti-soiling, soil releasing finish. These monomers have the formula:

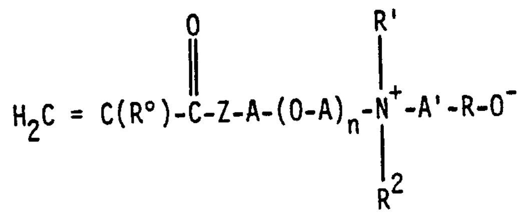

wherein n is 0 to 10; $R^0$ is hydrogen or methyl; Z is oxygen or —NH—; A can be a $C_2$—$C_3$ alkylene group (e.g. ethylene) when n is 1—10; R′ and $R^2$ can be $C_1$—$C_4$ alkyl; A′ is $C_1$—$C_4$ alkylene; and R can be $SO_2$.

U.S. Patent 3,671,502 to Samour et al. issued June 20, 1972, discloses co-polymers useful as binders in the production of non-wovens. These copolymers consist essentially of from about 5 to about 90% of a monomer having the formula:

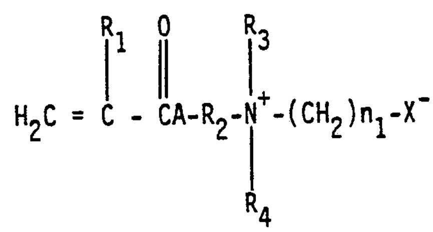

wherein $R_1$ is hydrogen or methyl; A is oxygen or —NH—; $R_2$ is ethylene, propylene, 2-hydroxypropylene or 2-acetoxypropylene; $R_3$ and $R_4$ are alkyl; $n_1$ is 1 to 4; and $X^-$ is $SO_3$— or $CO_2$—; and from about 10 to about 95% by weight of a hydroxyacrylate such as a polyglycerol acrylate/methacrylate having the formula:

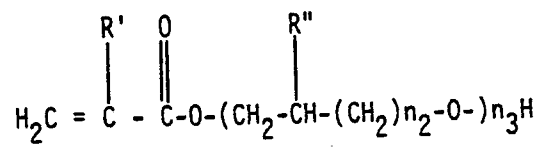

wherein R′ is hydrogen or methyl; R″ is hydrogen, methyl or hydroxy; $n_2$ is 0 when R″ is hydrogen or methyl (e.g. an ethylene group); and $n_3$ is 2 to 4.

U.S. Patent 3,838,057 to Barnes et al. issued September 24, 1974, discloses toilet bars containing ethoxylated quaternary ammonium compounds, including ethoxylated, quaternized polyethyleneimines (PEIs) taught to be useful in the detergent, textile, and polymer industries, as anti-static and softening agents. These ethoxylated quaternized PEIs have the formula:

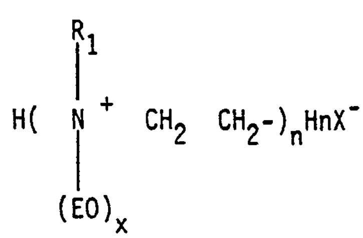

wherein $R_1$ is a compatible quaternary nitrogen substituent; n is at least 2; x is from 3 to 40; and $X^-$ is a compatible anion. Preferred compounds are those where $R_1$ is a $C_8$—$C_{22}$ alkyl group or the group:

$$R'COO(EO)_y—CH_2CHOHCH_2—$$

where R′ is a $C_8$—$C_{22}$ alkyl group and y is from 3 to 40. See also U.S. Patent 4,179,382 to Rudkin et al., issued December 18, 1979; U.S. Patent 4,152,272 to Young, issued May 1, 1979; and European Application 2,085 to

Rudkin et al., published May 30, 1979, which disclose ethoxylated quaternized polyamines having $C_{10}$ to $C_{24}$ alkyl or alkenyl groups attached to one of the nitrogen atoms useful as fabric softeners.

U.S. Patent 3,531,417 to Morehouse issued September 29, 1970, discloses polysiloxanes having sulfonated polyoxyalkylene groups useful as wetting agents, emulsifiers and detergents. These siloxanes can be used in aqueous solutions at up to 20% by weight, and usually at 0.01 to 1% by weight. These siloxanes contain 1 to 100 mole % of units having the formula:

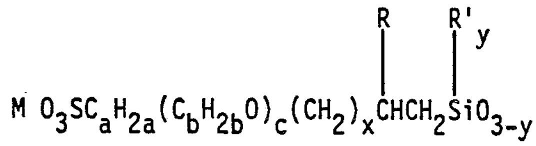

wherein m is a cation (e.g. sodium); R can be hydrogen; R' can be methyl; a can be 3; b can be 2 or 3; c is 1 to 100; x is 0 or 1; y can be 1; and d is 1 to 4. Example 1 discloses one such siloxane having the formula:

$$Me_2SiO(Me_2SiO)_{20}[NaO_3SC_3H_6O(C_3H_6O)_{14}$$

$$(C_2H_4O)_{19}C_3H_6SiMeO]_{3.2}SiMe_3$$

which was used as a detergent for soiled cotton (1% aqueous solution). See also U.S. Patent 3,531,507 to Morehouse issued September 29, 1970 (polysiloxanes having sulfonated or sulfated polyoxyalkylene groups useful as detergents); U.S. Patent 3,513,183 to Morehouse issued May 19, 1970 (polysiloxanes having sulfated polyoxyalkylene groups useful as detergents); U.S. Patent 3,997,580 to Morehouse issued December 14, 1976 (polysiloxanes having sulfated polyoxyalkylene groups useful as detergents).

U.S. Patent 3,875,202 to Steckler issued April 1, 1975, discloses monomers useful in the preparation of co- or ter-polymeric films and fibers, and especially to build in anti-static properties. These monomers have the formula:

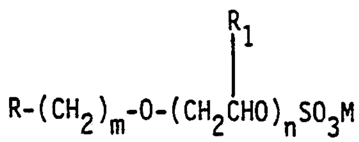

wherein R can be vinyl or allyl; $R_1$ is either hydrogen; methyl or ethyl; m is 1—10; n is either 0 or a number from 1 to 100; and M is either ammonium or an alkali metal. Example 11 discloses a co-polymer of an allyl polyethoxy sulfate (n equal to about 5) with vinylacetate. U.S. Patent 3,839,393 to Steckler issued October 1, 1974, discloses a similar monomer having the formula:

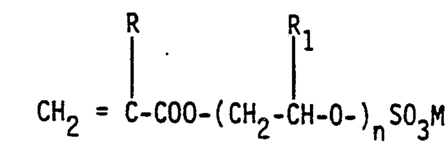

wherein R is either hydrogen or methyl; $R_1$ is either hydrogen or an alkyl of from 1—22 carbon atoms; n is 1 to 3 when $R_1$ is either hydrogen or an alkyl of 1—2 carbon atoms and M is either ammonium or an alkali metal. Example 8 discloses a polymer formed between one such monomer and styrene, N-butyl acrylate and methacrylic acid.

U.S. Patent 3,301,783 to Dickson, et al., issued January 31, 1967, discloses oxyalkylated, acylated, alkylated, carbonylated and olefinated derivatives of polyalkyleneimines, in particular polyethyleneimines (PEIs). For the oxyalkylated derivatives, the alkylene oxide (e.g. ethylene oxide) is reacted with the polyalkyleneimine in a mole ratio of from 1:1 to 1000:1, and preferably in a ratio of from 1:1 to 200:1. Among the ethoxylated PEIs disclosed are Examples $1—0_7$ and $1—0_8$ formed by condensing 105 and 200 moles, respectively, of ethylene oxide with a 900 M.W. PEI. The degree of ethoxylation calculates out to about 4.5 and about 8 ethoxy groups per reactive site, respectively. See also Examples $27—0_5$ and $27—0_6$ which disclose ethoxylated polypropyleneimines (M.W. 500) which have about 4 and about 8 ethoxy units per reactive site, respectively. Amongst the numerous disclosed uses of these polyalkyleneimine derivatives is a teaching that they are useful as detergents, softening agents, and anti-static agents. Preferred uses disclosed by this patent are as chelating agents, lubricating oil additives, emulsifying agents, and cutting oils.

U.S. Patent 2,792,371 to Dickson, issued May 14, 1957, teaches a process for breaking petroleum emulsions with oxyalkylated tetraethylene pentaamines (TEPA). Ethoxylated TEPAs specifically disclosed include those having about 5 (Example 3aa), about 7 (Example 4aa), about 8.5 (Example 5a) and about 15.5 (Example Bc) ethoxy units per reactive site. Similarly, U.S. patent 2,792,370 to Dickson issued May 14, 1957, teaches a process for breaking petroleum emulsions with oxyalkylated triethylene tetramines (TETAs) including those having about 5.5 (Example 3aa), about 7.5 (Example 4aa), about 9 (Example 5a) and about

16.5 (Example Bc) ethoxy units per reactive site. See also U.S. patent 2,792,372 to Dickson, issued May 14, 1957, (oxyalkylated higher PEAs used to break petroleum emulsions); U.S. patent 2,792,369 to Dickson, issued May 14, 1957 (oxyalkylated diethylene triamines used to break petroleum emulsions).

U.S. Patent 4,171,278 to Andree et al., issued October 16, 1979, discloses cold water detergent compositions containing a detergent surfactant (e.g. anionic) and a hydroxyalkyl amine in a weight ratio of 100:1 to 1:1. The amine can have the formula:

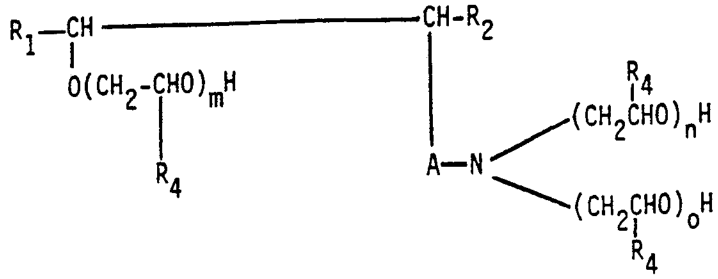

wherein $R_1$ is $C_1$—$C_{16}$ alkyl; $R_2$ is H or $C_1$—$C_{16}$ alkyl; $R_1 + R_2$ have 6—20 carbon atoms; $R_4$ is H or methyl; m, n, and o, are each 0 to 3 and A is bridging group such as

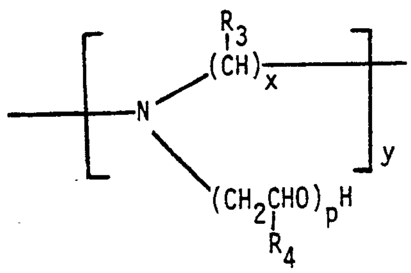

wherein $R_3$ is H or methyl; x is 2 to 6; y is 1 to 3; and p is 0 to 3; the sum of m to p being 1 to 5.5, and preferably 1 to 2. See also German Patent Document 2,165,900 to Henkel, published July 5, 1973, which discloses a washing agent for graying prevention formed by the reaction product of a PEI with an alkylglycidylether and ethylene oxide (2-hydroxyethyl moiety at each reactive site when ethoxylated).

Disclosure of the Invention

The present invention relates to zwitterionic polymers having clay soil removal/anti-redeposition properties. These polymers comprise a polymer backbone, at least 2 M groups and at least one L—X group, wherein M is a cationic group attached to or integral with the backbone and contains an N+ positively charged center; X is an anionic group or a mixture of anionic and nonionic groups; and L is a hydrophilic chain connecting groups M and X or connecting X to the backbone. L also contains the polyoxyalkylene moiety $—[(R'O)_m(CH_2CH_2O)_n]—$, wherein R' is $C_3$—$C_4$ alkylene or hydroxyalkylene, m and n are numbers such that the moiety $—(CH_2CH_2O)_n—$ comprises at least 50% by weight of said polyoxyalkylene moiety, and n is at least 3.

The present invention further relates to detergent compositions which comprise from 0.05 to 95% by weight of these zwitterionic polymers or mixtures thereof. These detergent compositions further comprise from 1 to 75% by weight of a nonionic, anionic, ampholytic, zwitterionic, or cationic detergent surfactant, or mixture thereof. In addition to these detergent surfactants, the detergent compositions can optionally comprise from 0 to 80% by weight of a detergent builder.

The zwitterionic polymers of the present invention provide clay soil removal benefits while being anionic detergent surfactant compatible. It is believed that the positively charged cationic groups cause adsorption of the polymer onto the negatively charged layers of the clay particle. It is also believed that the hydrophilic ethoxy units attached to the polymer backbone swell the clay particle so that it loses its cohesive character and is swept away in the wash water. It is further believed that the negatively charged anionic groups attached to the hydrophilic chain aid in forcing apart the negatively charged layers of the clay particle.

The anti-redeposition benefits provided by these zwitterionic polymers are also believed to be due to the positively charged cationic groups which cause it to be adsorbed onto soil suspended in the wash water. As more and more of these polymers adsorb onto the suspended soil, it becomes encased within a hydrophilic layer provided by the attached ethoxy units. As such, the hydrophilically encased soil is prevented from redepositing on fabrics, in particular hydrophobic fabrics such as polyester, during the laundering cycle. Moreover, the negatively charged anionic groups are believed to aid in this process by keeping the encased soils from agglomerating into larger masses which could be trapped by the washed fabric.

Zwitterionic Polymers

The water-soluble zwitterionic polymers of the present invention comprise a polymer backbone, and at least 2 M groups and at least one L—X group, wherein M is a cationic group attached to or integral with the backbone; X is an anionic group or a mixture of anionic or nonionic groups; and L is a hydrophilic chain connecting groups M and X or connecting X to the polymer backbone.

As used herein, the term "polymer backbone" refers to the polymeric moiety to which groups M and L—X are attached to or integral with. Included within this term are oligomer backbones (2 to 4 units), and true polymer backbones (5 or more units).

As used herein, the term "attached to" means that the group is pendent from the polymer backbone, as represented by the following general structures A and B:

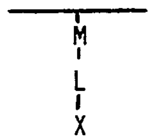 A

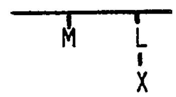 B

As used herein, the term "integral with" means that the group forms part of the polymer backbone, examples of which are represented by the following general structures C and D:

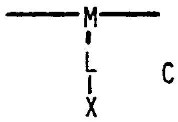 C

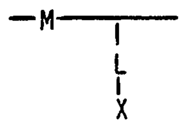 D

Any polymer backbone can be used as long as the zwitterionic polymer formed is water-soluble and has clay soil removal/anti-redeposition properties. Suitable polymer backbones can be derived from the polyurethanes, the polyesters, the polyethers, the polyamides, the polyimides, the polyacrylates, the polyacrylamides, the polyvinylethers, the polyethylenes, the polypropylenes and like polyalkylenes, the polystyrenes and like polyalkarylenes, the polyalkyleneamines, the polyalkyleneimines, the polyvinylamines, the polyallylamines, the polydiallylamines, the polyvinylpyridines, the polyaminotriazoles, polyvinyl alcohol, the aminopolyureylenes, and mixtures thereof.

M can be any compatible cationic group which comprises an $N^+$ (quaternary), positively charged center. The quaternary positively charged centers can be represented by the following general structures E and F:

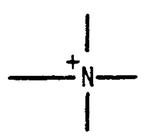 E

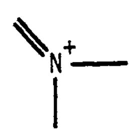 F

Particularly preferred M groups are those containing a quaternary center represented by general structure E. The cationic group M is also preferably positioned close to or integral with the polymer backbone.

X can be any compatible anionic group, or a mixture of anionic and nonionic groups. Suitable anionic groups include $SO_3^-$, $OSO_3^-$, and $CO_2^-$. Particularly preferred anionic groups are $SO_3^-$ or $OSO_3^-$. Suitable nonionic groups include hydrogen (H), $C_1$—$C_4$ alkyl or hydroxyalkyl ester or ether groups, or mixtures thereof. The particularly preferred nonionic groups are H and methyl ether. A mixture of from 1 to 100% anionic groups and from 0 to 99% nonionic groups is suitable. A mixture of from 50 to 100% anionic groups and from 0 to 50% nonionic groups is typical.

The zwitterionic polymers of the present invention normally have a ratio of cationic groups M to anionic groups X of 1:1. However, by varying the amount of anionic X groups in the polymer, or by appropriate copolymerization of cationic, anionic (i.e. containing the group L—X), or mixed cationic/anionic monomers, the ratio of cationic groups M to anionic groups X can be varied. The ratio of groups M to anionic groups X can usually range from 1:2 to 100:1. In preferred zwitterionic polymers, the ratio is from 1:1 to 50:1. The polymers formed from such copolymerization are typically random, i.e. the cationic, anionic, or mixed cationic/anionic monomers copolymerize in a nonrepeating sequence.

The units which contain groups M and groups L—X can comprise 100% of the zwitterionic polymers of the present invention. However, inclusion of other units (preferably nonionic) in the polymers is also permissible. Examples of other units include acrylamides, vinylethers, and those containing unquaternized tertiary amine groups ($M^1$) containing an N center. These other units can comprise from 0 to 90% of the polymer (from 10 to 100% of the polymer being units containing groups M and L—X, including $M^1$—L—X groups). Usually, these other units comprise from 0 to 50% of the polymer (from 50 to 100% of the polymer being units containing groups M and L—X).

The number of groups M and L—X usually ranges from 2 to 200 each. Typically, the number of groups M and L—X are each from 3 to 100. Preferably, the number of groups M and L—X are each from 3 to 40.

Other than moieties for connecting groups M and X, or for attachment to the polymer backbone,

hydrophilic chain L usually consists entirely of the polyoxyalkylene moiety $-[(R'O)_m(CH_2CH_2O)_n]-$. The moieties $-(R'O)_m-$ and $-(CH_2CH_2O)_n-$ of the polyoxyalkylene moiety can be mixed together, or preferably form blocks of $-(R'O)_m-$ and $-(CH_2CH_2O)_n-$ moieties. R' is preferably $C_3H_6$ (propylene); m is preferably from 0 to 5, and most preferably 0, i.e. the polyoxyalkylene moiety consists entirely of the moiety $-(CH_2CH_2O)_n-$. The moiety $-(CH_2CH_2O)_n-$ preferably comprises at least 85% by weight of the polyoxyalkylene moiety, and most preferably 100% by weight (m is 0). For the moiety $-(CH_2CH_2O)_n^-$, n is usually from 3 to 100. Preferably, n is from 12 to 42.

A plurality (2 or more) of moieties —L—X can also be hooked together and attached to group M or to the polymer backbone, examples of which are represented by the following general structures G and H:

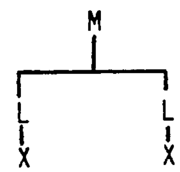 G

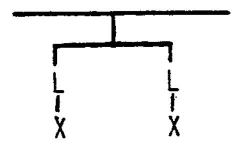 H

Structures such as G and H can be formed, for example, by reacting glycidol with group M or with the polymer backbone, and then ethoxylating the subsequently formed hydroxy groups.

The level at which the zwitterionic polymer(s) can be present in the detergent compositions of the present invention can vary widely depending upon the polymer used, the type of detergent formulation (liquid, granular), and the benefits desired. These compositions can be used as laundry detergents, laundry additives, and laundry pretreatments. Generally, these polymers can be included in an amount of from 0.05 to 95% by weight of the composition, with the usual range being from 0.1 to 10% by weight for laundry detergents. Preferred detergent compositions comprise from 0.5 to 5% by weight of the polymer of the present invention. For these preferred compositions, the polymer is typically present at from 1 to 3% by weight. The polymer is normally present at a level that provides from 2 ppm to 200 ppm, preferably from 10 ppm to 100 ppm, of the polymer in the wash solution at recommended U.S. usage levels, and normally from 30 ppm to 1000 ppm, preferably from 50 ppm to 500 ppm for European usage levels.

Representative classes of zwitterionic polymers of the present invention are as follows:

A. *Polyurethane, Polyester, Polyether, Polyamide*

One class of suitable zwitterionic polymers are derived from polyurethanes, polyesters, polyethers or polyamides. These polymers comprise units selected from those having formulas I, II and III:

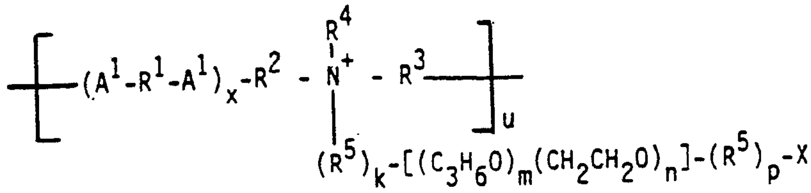 I

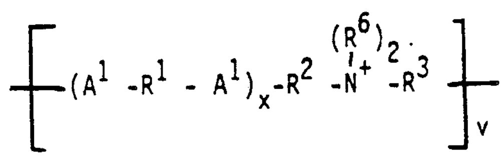 II

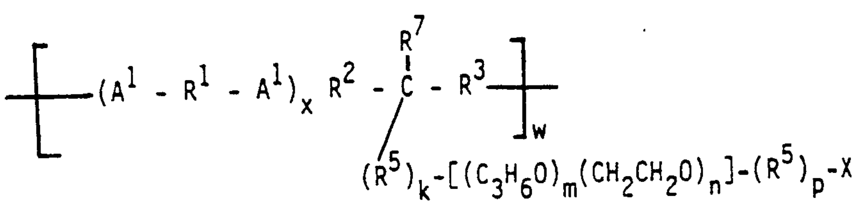 III

wherein $A^1$ is 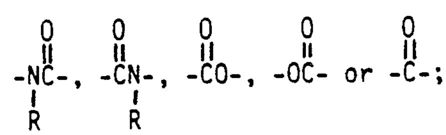

R is H or $C_1$—$C_4$ alkyl or hydroxyalkyl; $R^1$ is $C_2$—$C_{12}$ alkylene, hydroxyalkylene, alkenylene, cycloalkylene, arylene or alkarylene, or a $C_2$—$C_3$ oxyalkylene moiety having from 2 to 20 oxyalkylene units provided no O—O or N—O bonds are formed with $A^1$; when x is 1, $R^2$ is $-R^5-$ except when $A^1$ is

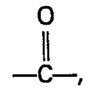

or is $-(OR^8)_y-$ or $-OR^5-$ provided that no O—O or N—O bonds are formed with $A^1$, and $R^3$ is $-R^5-$, except when $A^1$ is

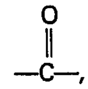

or is $-(R^8O)-_y$ or $-R^5O-$ provided that no O—O or O—N bonds are formed with $A^1$; when x is 0, $R^2$ is

$-(OR^8)_y-$, $-OR^5-$, 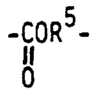, 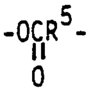, 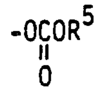, 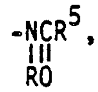,

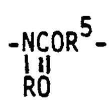, 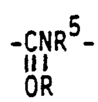, or 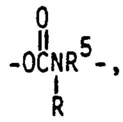, and $R^3$ is $-R^5-$;

$R^4$ is $C_1-C_4$ alkyl or hydroxyalkyl, $-(R^8O)_q-R^9$, or the moiety $-(R^5)_k-[(C_3H_6O)_m(CH_2CH_2O)_n]-(R^5)_p-X$; $R^5$ is $C_1-C_{12}$ alkylene, hydroxyalkylene, alkenylene, arylene, or alkarylene; each $R^6$ is $C_1-C_4$ alkyl or hydroxyalkyl, $-(R^8O)_q-R^9$, or two $R^6$ together form the moiety $-(CH_2)_r-A^2-(CH_2)_s-$, wherein $A^2$ is $-O-$ or $-CH_2-$; $R^7$ is H or $R^4$; $R^8$ is $C_2-C_3$ alkylene or hydroxyalkylene; $R^9$ is H,

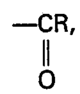

$-R$, or a mixture thereof; X is $SO_3^-$, $OSO_3^-$ or $CO_2^-$; k is 0 or 1; m is from 0 to 5; n is at least 3; m and n are numbers such that the moiety $-(CH_2CH_2O)_n-$ comprises at least 85% by weight of the moiety $-[(C_3H_6O)_m(CH_2CH_2O)_n]-$; p is 1, or 0 only when X is $SO_3^-$; q is from 1 to 100; r is 1 or 2, s is 1 or 2, and r + s is 3 or 4; y is from 2 to 20; the number of u, v and w is such that there are at least 2 N+ centers and at least 2 X groups.

In the above formulas, $A^1$ is preferably

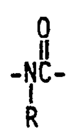 or 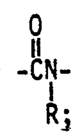;

$A^2$ is preferably $-O-$; x is preferably 1; and R is preferably H. $R^1$ can be linear

(e.g. $-CH_2CH_2-$, $-CH_2-CH_2-CH_2-$, 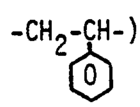) or

branched (e.g. 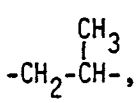, 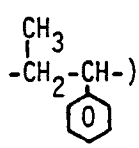)

alkylene, hydroxyalkylene, alkenylene, cycloalkylene, alkarylene or oxyalkylene; when $R^1$ is a $C_2-C_3$ oxyalkylene moiety, the number of oxyalkylene units is preferably from 2 to 12; $R^1$ is preferably $C_2-C_6$ alkylene or phenylene, and most preferably $C_2-C_6$ alkylene (e.g., ethylene, propylene, hexamethylene). $R^2$ is preferably $-(OR^8)_y-$ or $-OR^5-$; $R^3$ is preferably $-(R^8O)_y-$ or $-R^5O-$; $R^4$ and $R^6$ are preferably methyl or $-(R^8O)_q-H$, and most preferably methyl. Like $R^1$, $R^5$ can be linear or branched, and is preferably $C_1-C_3$ alkylene; $R^7$ is preferably H or $C_1-C_3$ alkyl; $R^8$ is preferably ethylene; X is preferably $SO_3^-$ or $OSO_3^-$; k is preferably 0; m is preferably 0; p is preferably 1; q is preferably from 2 to 40; r and s are each preferably 2; y is preferably from 2 to 12.

In the above formulas, n is preferably at least 6 when the number of N+ centers and X groups is 2 or 3; n is most preferably at least 12, with a typical range of from 12 to 42 for all ranges of u + v + w. For homopolymers (v and w are 0), u is preferably from 3 to 40, and is most preferably from 3 to 20. For random copolymers (u is at least 1 or preferably 0), v and w are each preferably from 3 to 40.

B. *Polyacrylate, Polyacrylamide, Polyvinylether*

Another class of suitable zwitterionic polymers are derived from polyacrylates, polyacrylamides, polyvinylethers. These polymers comprise units selected from those having formulas IV, V and VI.

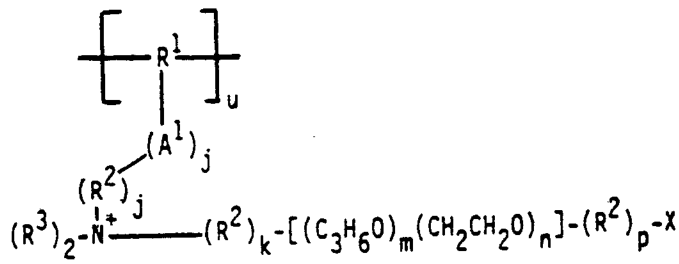

IV

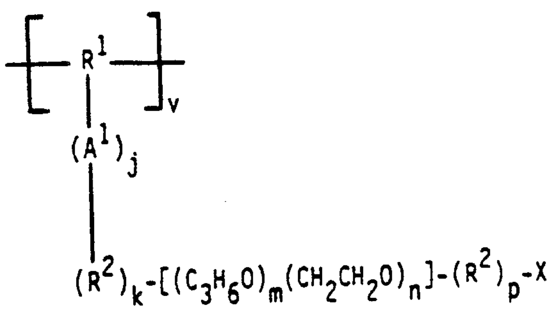

V

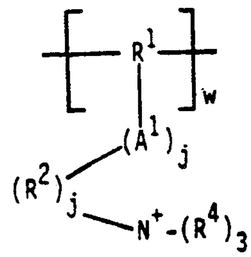

VI

wherein $A^1$ is

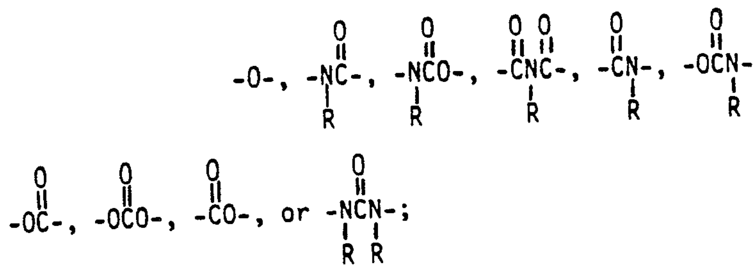

R is H or $C_1$—$C_4$ alkyl or hydroxyalkyl; $R^1$ is substituted $C_2$—$C_{12}$ alkylene, hydroxyalkylene, alkenylene, arylene or alkarylene, or substituted $C_2$—$C_3$ oxyalkylene; each $R^2$ is $C_1$—$C_{12}$ alkylene, hydroxyalkylene, alkenylene, arylene or alkarylene; each $R^3$ is $C_1$—$C_4$ alkyl or hydroxyalkyl, $-(R^5O)_q-R^6$, the moiety $-(R^2)_k-[(C_3H_6O)_m-(CH_2CH_2O)_n]-(R^2)_p-X$, or two $R^3$ together form the moiety $-(CH_2)_r-A^2-(CH_2)_s-$, wherein $A^2$ is —O— or $-CH_2-$; each $R^4$ is $C_1$—$C_4$ alkyl or hydroxyalkyl, $-(R^5O)_q-R^6$, or two $R^4$ together form the moiety $-(CH_2)_r-A^2-(CH_2)_s-$; $R^5$ is $C_2$—$C_3$ alkylene or hydroxyalkylene; $R^6$ is H,

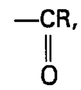

—R, or a mixture thereof; X is $SO_3^-$, $OSO_3^-$ or $CO_2^-$; j is 1 or 0; k is 1 or 0; m is from 0 to 5; n is at least 3; m and n are numbers such that the moiety $-(CH_2CH_2O)_n-$ comprises at least 85% by weight of the moiety $-[(C_3H_6O)_m(CH_2CH_2O)_n]-$; p is 1, or 0 only when X is $SO_3^-$ or H; q is from 1 to 100; r is 1 or 2, s is 1 or 2 and r + s is 3 or 4; the number of u, v and w are such that there are at least 2 N+ centers and at least 2 X groups.

In the above formulas, $A^1$ is preferably

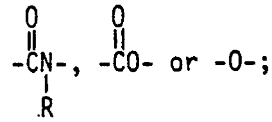

$A^2$ is preferably —O—; R is preferably H. $R^1$ can be linear (e.g.

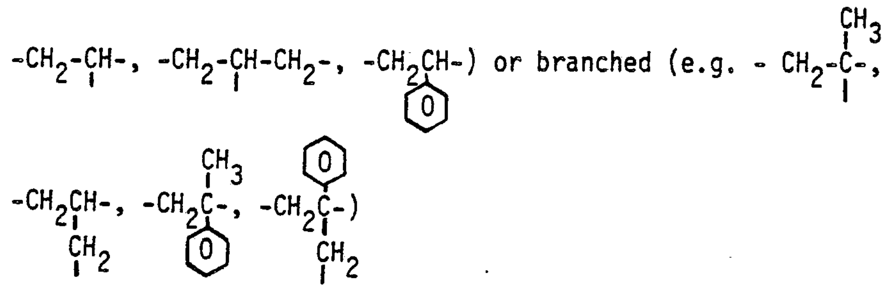

or branched (e.g.

substituted alkylene, hydroxyalkylene, alkenylene, alkarylene, or oxyalkylene; $R^1$ is preferably substituted $C_2$—$C_6$ alkylene or substituted $C_2$—$C_3$ oxyalkylene, and most preferably $—CH_2CH—$ or

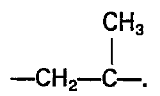

Each $R^2$ is preferably $C_2$—$C_3$ alkylene; each $R^3$ and $R^4$ are preferably methyl or $—(R^5O)_q—H$ and most preferably methyl; $—R^5—$ is preferably ethylene; X is preferably $SO_3^-$ or $OSO_3^-$; j is preferably 1; k is preferably 0; m is preferably 0; p is preferably 1; q is preferably from 2 to 40; r and s are each preferably 2.

In the above formulas, n, u, v and w can be varied according to the n, u, v and w for the polyurethane.

C. *Polyalkyleneamine, Polyalkyleneimine*

Another class of suitable zwitterionic polymers are derived from polyalkyleneamines, polyalkyleneimines. These polymers comprise units selected from those having formulas VII, VIII and IX:

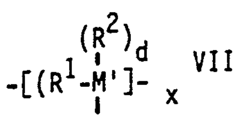 VII

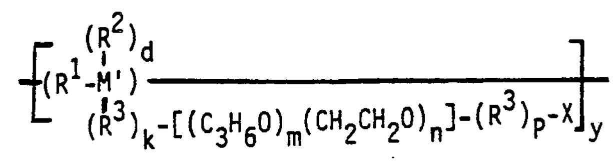 VIII

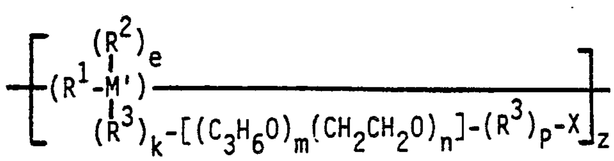 IX

wherein $R^1$ is $C_2$—$C_{12}$ alkylene, hydroxyalkylene, alkenylene, cycloalkylene, arylene or alkarylene, or a $C_2$—$C_3$ oxyalkylene moiety having from 2 to 20 oxyalkylene units provided that no O—N bonds are formed; each $R^2$ is $C_1$—$C_4$ alkyl or hydroxyalkyl, $—(R^4O)_q—R^5$, or the moiety $—(R^3)_k—[(C_3H_6O)_m(CH_2CH_2O)_n]—(R^3)_p—X$; each $R^3$ is $C_1$—$C_{12}$ alkylene, hydroxyalkylene, alkenylene, arylene or alkarylene; $R^4$ is $C_2$—$C_3$ alkylene or hydroxyalkylene; $R^5$ is H,

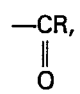

—R, or mixture thereof, wherein R is $C_1$—$C_4$ alkyl or hydroxyalkyl; M' is an N+ or N center; X is $SO_3^-$, $OSO_3^-$ or $CO_2^-$, or a mixture thereof with H; d is 1 when M' is N+ and is 0 when M' is N; e is 2 when M' is N+ and is 1 when M' is N; k is 1 or 0; m is from 0 to 5; n is at least 3; m and n are numbers such that the moiety $—(CH_2CH_2O)_n—$ comprises at least 85% by weight of the moiety $—[(C_3H_6O)_m(CH_2CH_2O)_n]—$; p is 1, or 0 only when X is $SO_3^-$ or H; q is from 1 to 100; the number of x, y and z is such that there are at least 2 M' groups, at least 2 N+ centers and at least 2 X groups.

In the above formulas, A is preferably —O—; $R^1$ can be varied like $R^1$ of the polyurethane; each $R^2$ is preferably methyl, $—(R^4O)_q—H$, or the moiety $—(R^3)_k—[(C_3H_6)_m(CH_2CH_2O)]—(R^3)_p—X$; each $R^3$ is preferably $C_1$—$C_3$ alkylene; each $R^4$ is preferably methyl $—(R^4O)_q—H$, or the moiety $—(R^3)_k—[(C_3H_6O)_m(CH_2CH_2O)_n]—(R^3)_p—X$; $R^4$ is preferably ethylene; X is preferably $SO_3^-$ or a mixture thereof with H; k is preferably 0; m is preferably 0; p is preferably 0; q is preferably from 2 to 40; r and s are each preferably 2.

In the above formulas, n is preferably at least 6 when the number of M' groups and X groups are each 2 or 3; n is most preferably at least 12, with a typical range of from 12 to 42 for all ranges of x + y + z. Typically, x + y + z is from 2 to 40, and preferably from 2 to 20. For short chain length polymers, x + y + z can range from 2 to 9 with from 2 to 9 N+ centers and from 2 to 11 X groups. For long chain length

polymers, x + y + z is at least 10, with a preferred range of from 10 to 42. For both the short and long chain length polymers, the M' groups are typically a mixture of from 50 to 100% N+ centers and from 0 to 50% N centers.

Preferred zwitterionic polymers within this class are derived from the $C_2$—$C_3$ polyalkyleneamines (x + y + z is from 2 to 9) and polyalkyleneimines (x + y + z is at least 10, preferably from 10 to 42). Particularly preferred zwitterionic polyalkyleneamines and polyalkyleneimines are the zwitterionic polyethyleneamines (PEAs) and polyethyleneimines (PEIs). These preferred zwitterionic polymers comprise units having the general formula:

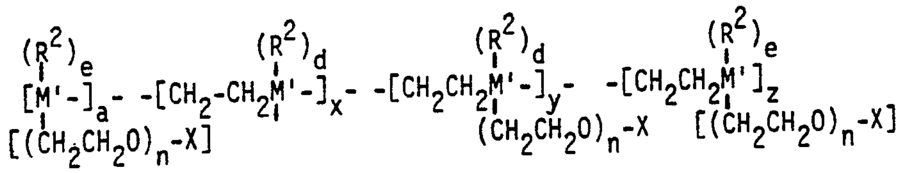

wherein $R^2$ (preferably methyl), M', X, d, e, x, y, z and n are defined as before, a is 1 or 0.

Prior to ethoxylation, the PEAs used in preparing zwitterionic polymers of the present invention have the following general formula:

$$[H_2N]_a—[CH_2CH_2N]_x—[CH_2CH_2\underset{H}{N}]_y—[CH_2CH_2NH_2]_z$$

wherein x + y + z is from 2 to 9, and a is 0 or 1 (molecular weight of from 100 to 400). Each hydrogen atom attached to each nitrogen atom represents an active site for subsequent ethoxylation. For preferred PEAs, x + y + z is from 3 to 7 (molecular weight of from 140 to 310). These PEAs can be obtained by reactions involving ammonia and ethylene dichloride, followed by fractional distillation. The common PEAs obtained are triethylenetetramine (TETA) and tetraethylenepentamine (TEPA). Above the pentamines, i.e., the hexamines, heptamines, octamines and possibly nonamines, the cogenerically derived mixture does not appear to separate by distillation and can include other materials such as cyclic amines and particularly piperazines. There can also be present cyclic amines with side chains in which nitrogen atoms appear. See U.S. Patent 2,792,372 to Dickson, issued May 14, 1957, which describes the preparation of PEAs.

The minimum degree of ethoxylation required for preferred clay soil removal/anti-redeposition performance can vary depending upon the number of units in the PEA. Where y + z is 2 or 3, n is preferably at least 6. Where y + z is from 4 to 9, suitable benefits are achieved when n is at least 3. For preferred zwitterionic PEAs, n is at least 12, with a typical range of from 12 to 42.

The PEIs used in preparing the polymers of the present invention have a molecular weight of at least 440 prior to ethoxylation, which represents at least 10 units. Preferred PEIs used in preparing these polymers have a molecular weight of from 600 to 1800. The polymer backbone of these PEIs can be represented by the general formula:

$$H_2N — [CH_2CH_2\underset{|}{N}—]_x—[—CH_2CH_2\overset{H}{N}—]_y— [CH_2CH_2NH_2]_z$$

wherein the sum of x, y and z represents a number of sufficient magnitude to yield a polymer having the molecular weights previously specified. Although linear polymer backbones are possible, branch chains can also occur. The relative proportions of primary, secondary and tertiary amine groups present in the polymer can vary, depending on the manner of preparation. The distribution of amine groups is typically as follows:

| | |
|---|---|
| $—CH_2CH_2—NH_2$ | 30% |
| $—CH_2CH_2—NH—$ | 40% |
| $—CH_2CH_2—\underset{|}{N}—$ | 30% |

Each hydrogen atom attached to each nitrogen atom of the PEI represents an active site for subsequent ethoxylation. These PEIs can be prepared, for example, by polymerizing ethyleneimine in the presence of a catalyst such as carbon dioxide, sodium bisulfite, sulfuric acid, hydrogen peroxide, hydrochloric acid, acetic acid. Specific methods for preparing PEIs are disclosed in U.S. Patent 2,182,306 to Ulrich et al., issued December 5, 1939; U.S. Patent 3,033,746 to Mayle et al., issued May 8, 1962; U.S. Patent 2,208,095 to Esselmann et al., issued July 16, 1940; U.S. Patent 2,806,839 to Crowther, issued September 17, 1957; and U.S. Patent 2,553,696 to Wilson, issued May 21, 1951.

As defined in the preceding formulas, n is at least 3 for the zwitterionic PEIs. However, it should be noted that the minimum degree of ethoxylation required for suitable clay soil removal/anti-redeposition performance can increase as the molecular weight of the PEI increases. For PEIs having a molecular weight of at least 600, n is usually at least 12, with a typical range of from 12 to 42.

D. *Diallylamine Polymers*

Another class of suitable zwitterionic polymers are those derived from the diallylamines. These polymers comprise units selected from those having formulas and X and XI:

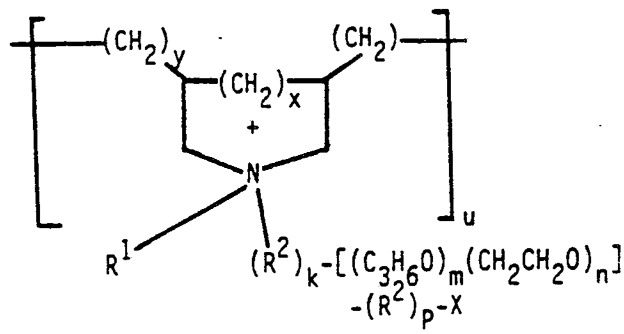

X

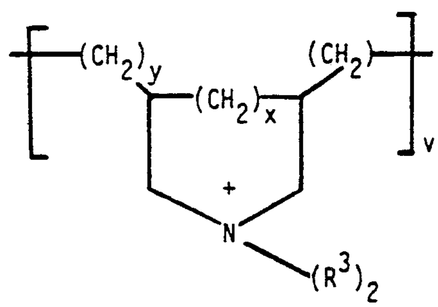

XI

wherein $R^1$ is $C_1$—$C_4$ alkyl or hydroxyalkyl, —$(R^4O)_q$—$R^5$, or the moiety —$(R^2)_k$—$[(C_3H_6O)_m(CH_2CH_2O)_n]$—$(R^2)_p$—X; each $R^2$ is $C_1$—$C_{12}$ alkylene, hydroxyalkylene, alkenylene, arylene or alkarylene; each $R^3$ is $C_1$—$C_4$ alkyl or hydroxyalkyl, —$(R^4O)_q$—$R^5$, or two $R^3$ together form the moiety —$(CH_2)_r$—A—$(CH_2)_s$—, wherein A is —O— or —$CH_2$—; $R^4$ is $C_2$—$C_3$ alkylene or hydroxyalkylene; $R^5$ is H,

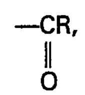

—R, or mixture thereof, wherein R is $C_1$—$C_4$ alkyl or hydroxyalkyl; X is $SO_3^-$, $OSO_3^-$ or $CO_2^-$, or mixture thereof with H; k is 1 or 0; m is from 0 to 5; n is at least 3; m and n are numbers such that the moiety —$(CH_2CH_2O)_n$— comprises at least 85% by weight of the moiety —$[(C_3H_6O)_m(CH_2CH_2O)_n]$—; p is 1, or 0 only when X is $SO_3^-$ or H; q is from 1 to 100; r is 1 or 2, s is 1 or 2, and r + s is 3 or 4; x is 1 or 0; y is 1 when x is 0, and 0 when x is 1; the number of u and v is such that the number of N+ centers is at least 2 and the number of X groups is at least 2.

In the above formulas, A is preferably —O—; $R^1$ is preferably methyl or —$(R^4O)_q$—H, and most preferably methyl; each $R^2$ is preferably $C_2$—$C_3$ alkylene; each $R^3$ is preferably methyl or —$(R^4O)_q$—H, and most preferably methyl; $R^4$ is preferably ethylene; X is preferably $SO_3^-$ or mixture thereof with H; k is preferably 0; m is preferably 0; p is preferably 0; q is preferably from 2 to 40; r and s are each preferably 2.

In the above formulas, n is preferably at least 6 when the number of N+ centers and X groups are each 2 or 3, n is preferably at least 12, with a typical range of from 12 to 42 for all ranges of u + v. Typically, v is 0, and u is from 3 to 40, and preferably from 3 to 20.

## Methods for Making Zwitterionic Polymers

A. *Polyurethane*

The polyurethane versions of the present invention can be prepared according to the following general scheme:

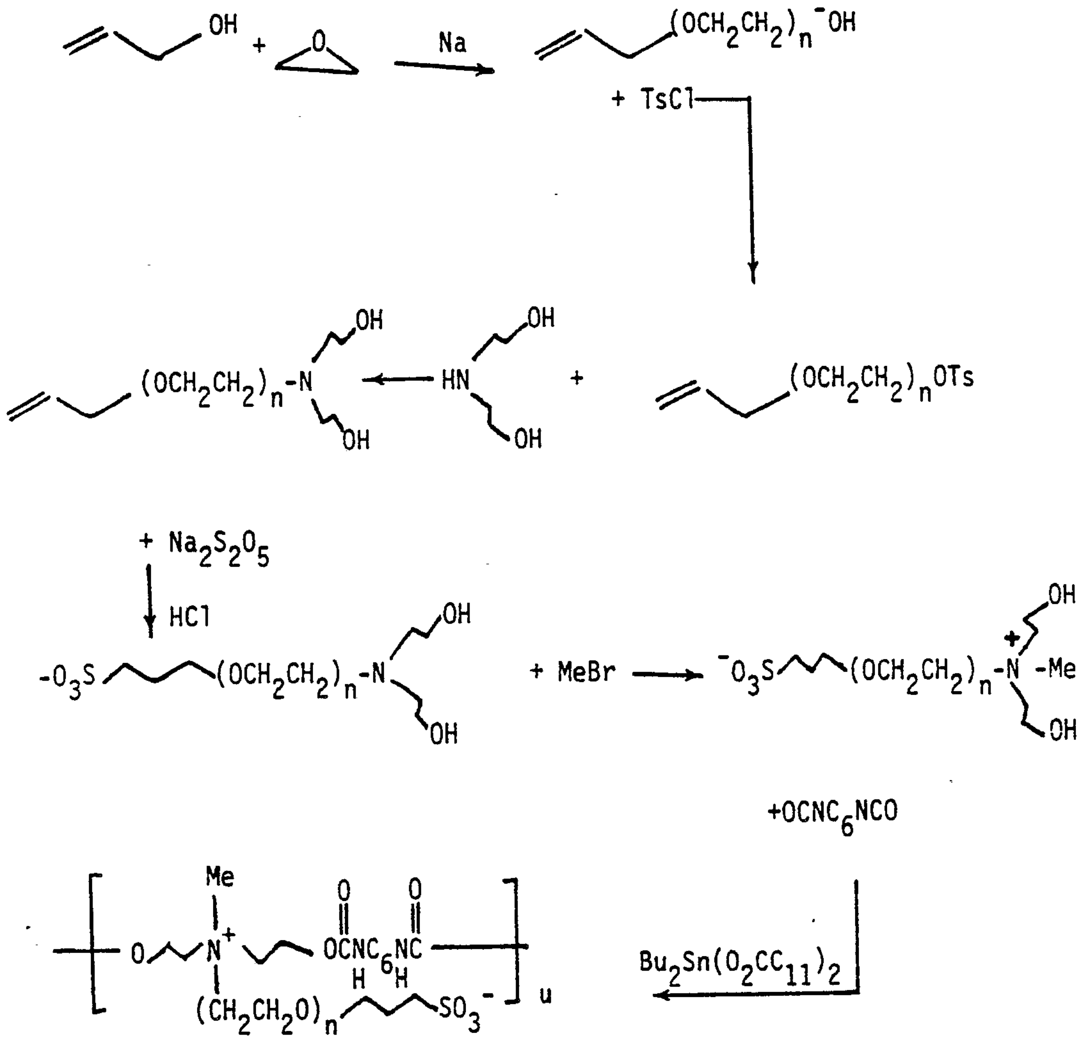


The synthesis of one such polymer is described as follows:

Example 1

Step 1: Ethoxylation

To a dry flask was added 102 grams (1.77 moles) of allyl alcohol. 5.5 grams (0.24 moles) of metallic sodium was then dissolved in the alcohol under argon. Ethylene oxide was then added to this mixture with stirring at 80°—120°C. After 17 hours, about 2063 grams of ethylene oxide had been condensed to form the respective ethoxylated compound (n = 26).

Step 2: Tosylation

In a flask under argon, 2170 g (1.77 moles) of the ethoxylated compound from step 1 was dissolved in 1000 ml of acetonitrile and then cooled to 10°C where the solution began to solidify. To this solution was added 490 grams (2.57 moles) of tosyl chloride dissolved in 500 ml of acetonitrile. The reaction mixture became hotter, was then cooled to 10°C and then 293 g (2.9 moles) of triethylamine was added. The temperature of the reaction mixture increased to a maximum of 37°C after 0.5 hours and then decreased. After 3.5 hours, 30 ml of $H_2O$ was added to the reaction mixture to decompose the remaining tosyl chloride.

Step 3: Amination

To the reaction mixture from step 3 was added 360 g (3.4 moles) of diethanolamine. After heating at 80°C for 18 hours, the reaction mixture was acidified with HCl and then extracted with ether. The aqueous phase was then extracted with a mixture of ether:acetonitrile (ratio of 5:2) twice. The aqueous phase was separated and then made basic with 50% NaOH (476 g). This aqueous phase was extracted with dichloromethane (2000 ml). The lower layer was separated and then extracted 3 times with 2000 ml portions of $\frac{1}{4}$ saturated NaCl solution while adding enough 50% NaOH to make the aqueous phase strongly basic (pH of 11). The lower cloudy organic layer was stripped to give 1000 ml of an oil. Toluene (200 ml) was then added and the mixture stripped again to give an oil (927 g) which gradually solidified on cooling. This solidified oil contained the desired allylpolyethoxy (26) bis (hydroxyethyl) amine.

Step 4: Sulfonation

The aminated compound (926 g, 0.87 moles) from step 3 was dissolved in $H_2O$ and then 12*N* HCl was added until the pH was 6—7. The temperature was then raised to 90°C and $Na_2S_2O_5$ (193 g) was added with continuous stirring and air bubbling. The reaction ran for 6 hours at which point additional $Na_2S_2O_5$ (200 g) was added and the reaction continued for 24 hours more.

The reaction mixture was worked up by adding 3 volumes of water and 0.75 volumes of dichloromethane. After gentle shaking, the clear lower layer was drawn off and the upper layer was then extracted twice more with dichloromethane. The aqueous phase was then ½ saturated with potassium carbonate (4000 g) and then reextracted with several portions of dichloromethane. The combined dichloromethane extracts were stripped to give 900 g of bis (hydroxyethyl) aminopolyethoxy (26)-3-propanesulfonate as an oil.

Step 5: Quaternization

The aminosulfonate compound (899 g, 0.87 moles) from step 4 was dissolved in ethanol. Methyl bromide was introduced through a fritted inlet below the surface of the reaction mixture until 240 g (2.5 moles) had been added. After 2.5 hours, the reaction was nearly complete. The insoluble salts present in the reaction mixture were removed by filtration. The filtrate was treated with a mixed bed (H—OH) resin to remove dissolved salts. Water (250 ml) was added to make the filtrate clear and then the filtrate was treated with three 453 g (1 lb.) portions of resin. After resin treatment, the conductivity of the filtrate was 7 µ mho/cm. The resin was filtered out and the combined filtrates and washings (6000 ml) were stripped to an oil (600 g) and then further stripped in a Kugelrohr at 80°—100°C for 5 hours under vacuum (less than 133.3 Pa (1 mmHg) pressure) to give a light yellow oil (575 g) which contained the zwitterionic monomer. This yellow oil crystallized on standing.

Step 6: Polymerization

The zwitterionic monomer (75 g, 0.07 moles) from step 5 was dissolved in chloroform free of ethanol stabilizer. The monomer had previously been evacuated in a Kugelrohr at 80°—90°C under a vacuum (pressure of 133.3 Pa (1 mmHg)) for at least 18 hours. The monomer in the chloroform was then dried overnight with 0.3 nm (3 Å) molecular sieves and then transferred to a dry flask (equipped with mechanical stirrer) under argon. To the monomer was added dibutyltin dilaurate catalyst (2.6 g, 0.058 mole equiv.) in chloroform under argon. To the stirred reaction mixture was then added hexamethylenediisocyanate (7.9 g, 0.05 moles) over a 5 minute period. The reaction mixture was stirred at room temperature for 18 hours. The chloroform was removed under a vacuum at about 70°C to give about 85 g of the desired polymer (u = 5) as a viscous liquid or solid.

B. *Random Copolymer of Anionic Ethoxylated Acrylate and Cationic Methacrylamide*

The random copolymer versions of the present invention can be prepared according to the following general scheme:

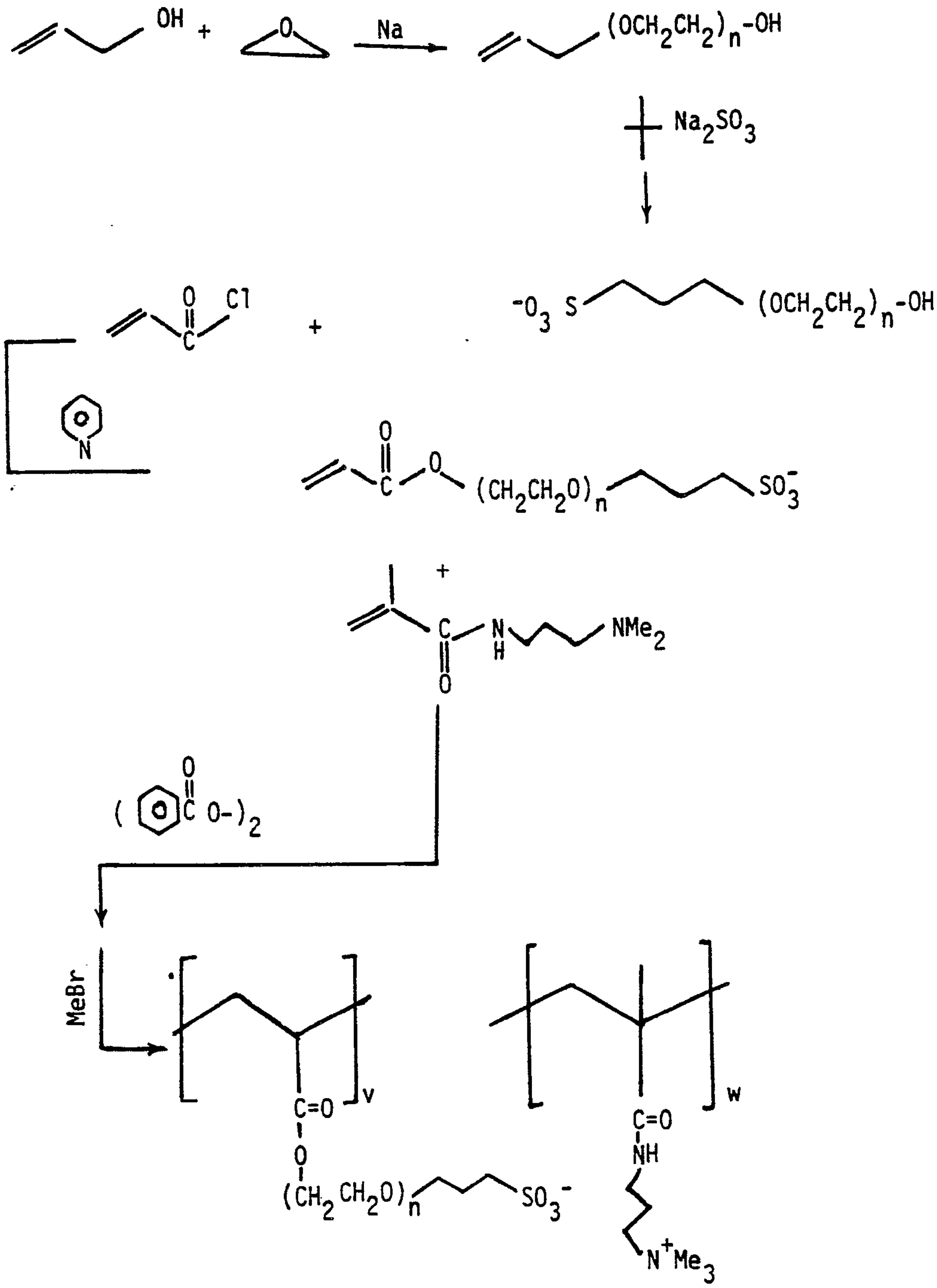


The synthesis of one such random copolymer is described as follows:

Example 2

Step 1: Preparation of Anionic Monomer

a. *Ethoxylation*

Allyl alcohol was ethoxylated using step 1 of the polyurethane synthesis to give the respective allylpolyethoxylate (12.5). A 452 g (0.77 moles) portion of this ethoxylated compound was added to 126 g (1.0 moles) of sodium sulfite in 300 ml of water. 10% sulfuric acid was then added until the pH was 6. Water was then added to provide 1600 ml of a two phase system. An air bubbler was inserted and the system was heated on a steambath overnight. The two layers were separated hot and the upper layer was extracted with toluene. The new lower layer which formed was then extracted twice with chloroform to provide an aqueous solution containing the desired product. This solution was adjusted to pH 9—10 and stripped of most of the solvent. The residue (223 g) was dissolved in 800 ml of acetonitrile and centrifuged to remove salts. The supernatant was then stripped to give 171 g of sodium polyethoxypropanesulfonate.

b. *Conversion to acrylate ester*

This sodium polyethoxypropanesulfonate was converted to the respective acrylate ester by treating 27.5 g of the sulfonate in 75 ml of tetrahydrofuran with 4.47 g of acrylolyl chloride under dry nitrogen. Pyridine was added gradually over 25 minutes with the temperature being kept in the 23°—32°C range. After the reaction mixture had stood overnight, 1.75 g of acryloyl chloride and 1.5 ml of pyridine were added and allowed to react for 0.5 hours. Then 100 ml of saturated NaCl solution was added, and after mixing, the reaction mixture was centrifuged. The lower liquid layer was extracted with 130 ml of dichloromethane. The lower dichloromethane layer which formed was washed with saturated NaCl solution (100 ml) and then with 0.6 saturated NaCl solution (100 ml). The dichloromethane was then removed under vacuum without heating to give 8.1 g of the acrylate ester as an oil.

Step 2: Random copolymerization with methacrylamide and quaternization

An 8 g portion (0.008 moles) of the sulfonate monomer from step 1 and 1.9 g (0.011 moles) of N-(3-dimethylaminopropyl)methacrylamide monomer were dissolved in 40 ml of acetonitrile. The reaction mixture was purged of oxygen by bubbling argon through it. A 0.23 g portion of benzoyl peroxide was separately dissolved in 10 ml of acetonitrile and similarly purged. The reaction mixture was heated to reflux and the benzoyl peroxide solution then added dropwise over 0.5 hours. Next, a 0.28 g portion of azobisisobutyronitrile in 5 ml of acetonitrile was added to the reaction mixture and heating was continued overnight. A stream of methyl bromide was then passed through $\frac{1}{2}$ of the reaction mixture which was then warmed slightly for 1 hour. A 4.1 g portion of the desired random copolymer was isolated by stripping off the solvent.

c. *Zwitterionic Polyethyleneamines and Polyethyleneimines*

Zwitterionic polyethyleneamines and polyethyleneimines can be prepared using standard methods for ethoxylating amines, with subsequent quaternization and sulfation. Representative syntheses of such polyethyleneamines and polyethyleneimines are as follows:

Example 3a

Step 1: Ethoxylation

Tetraethylenepentamine (TEPA) (M.W. 189, 13.5 g, 0.071 moles) was placed in a nominally dry flask and dried by stirring for 0.5 h at 110°—120°C under vacuum (pressure less than 133.3 Pa (1 mm Hg)). The vacuum was released by drawing ethylene oxide (EO) from a prepurged trap connected to a supply tank. Once the flask was filled with EO, an outlet stopcock was carefully opened to a trap connected to an exhaust bubbler. After 3 h stirring at 115°—125°C, H—NMR analysis indicated the degree of ethoxylation of 1 per reactive site. The reaction mixture was cooled while being swept with argon and 0.5 g (0.0125 moles) of 60% sodium hydride in mineral oil was then added. The stirred reaction mixture was swept with argon until hydrogen evolution ceased. EO was then added to the mixture as a sweep under atmospheric pressure at 117°—135°C with moderately fast stirring. After 31 h, 459 g (10.43 moles) of EO had been added to give a calculated total degree of ethoxylation of 21.

Step 2: Quaternization

A 34.8 g (0.0052 moles) portion of the ethoxylated TEPA from step 1 which was a brown waxy solid, was dissolved in $D_2O$ to give a 50% solution. The pH of the solution was 8. The solution was heated to 60°C and methyl bromide gas swept through the reaction vessel whose exit was connected to a bubbler. Several times during the reaction, the pH became acidic and $NaHCO_3$ was added to the reaction to maintain the pH at 8. After 20 h a bubbler was placed below the reaction mixture surface so that the methyl bromide was bubbled through the mixture while the stirring rate was increased. After a total of 22 h, the reaction mixture was diluted to 25% and dialized to remove salts. The reaction mixture was then freeze dried to give a pale yellowish tan crystalline solid as the quaternized ethoxylated TEPA.

Step 3: Sulfation

A 26.58 g (0.00373 moles) portion of the quaternized ethoxylated TEPA from step 3, was dissolved in 106 ml of dichloromethane which had been dried over molecular sieves. 2.91 g of chlorosulfonic acid was dissolved in 20 ml of dried dichloromethane and dripped into the reaction mixture over 3.25 h at room temperature. The reaction mixture was stirred at room temperature for an additional 3 h. The reaction mixture was then poured into 46.5 ml of NaOH and 30 g ice while swirling. The reaction mixture was then made more neutral by adding 13.5 ml of HCl (pH = 8). Dichloromethane was evaporated after which the aqueous mixture was dialized for 3 h then diluted to a 10% active aqueous solution containing the desired zwitterionic TEPA.

Example 3b

Step 1: Ethoxylation

By a procedure similar to that of Example 3a, PEI (21.5 g, M.W. 600, 0.5 moles) was dried at 120°C under vacuum and swept with EO until hydroxyethylation was complete (3 h). The hydroxyethylated compound was cooled under argon and 0.1 g (0.0022 moles) of 50% NaH in mineral oil was added. The reaction was

heated to 70°C and swept for 13 h until a total of 88.5 g of EO had been added which gave a calculated degree of ethoxylation of 3.4.

A 53 g (0.0173 mole) portion of this compound was placed in a similar apparatus, heated to 120°C and evacuated for 0.5 h then cooled under argon and an additional 0.5 g (0.010 moles) of 50% NaH was added. EO was swept in for 11 h until 103 g or EO had been added. This brought the total degree of ethoxylation up to 11.6.

A 74 g portion (0.0082 moles) of the 11.6 ethoxylated PEI was placed in a similar apparatus and swept with EO for 6 h at 170°C until 70 g EO had been added to give a total degree of ethoxylation = 23.4.

Step 2: Quaternization

By a procedure similar to that of Example 3a, 20 g (0.00114 moles) of the 23.4 ethoxylated PEI from step 1 was dissolved in $D_2O$, heated to 50°—60°C and swept with methyl bromide for a total of 9 h to provide the quaternized ethoxylated PEI.

Step 3: Sulfation

By a procedure similar to that of Example 3a, 6.01 g of the quaternized ethoxylated PEI (0.000317 moles) of step 2 was dissolved in 12 g of $D_2O$ having a pH of 8 and then adjusted to pH 9 using NaOH. To this mixture was added 2.25 g (0.0162 moles) of a sulfur trioxide-trimethyl amine complex to provide a reaction mixture having a pH of 8.7. The reaction continued for 10 h at 25°C (pH 8) then 0.53 g sodium carbonate (0.005 moles) was added to adjust the pH to 11.5. The reaction mixture was stirred for another 4—5 h at 50°C. The mixture was then dialized to remove salts and freeze dried to give an off-white solid as the zwitterionic PEI.

d. Diallylamine Polymers

Diallylamine polymer versions of the present invention can be prepared according to the following general scheme:

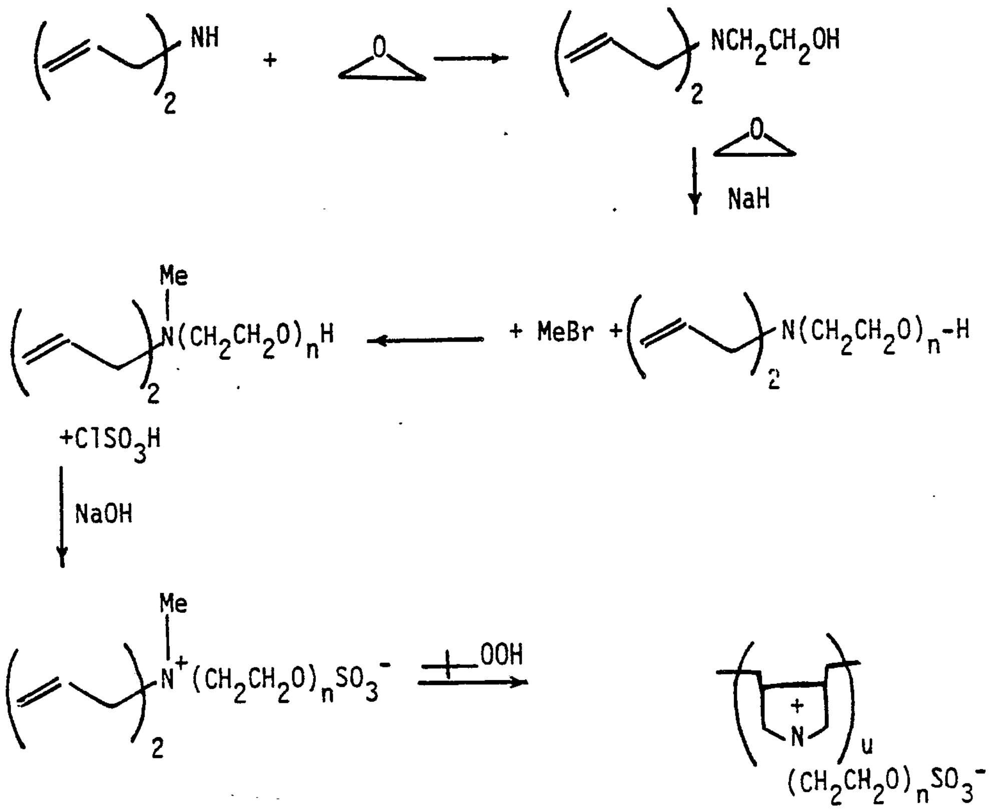


The synthesis of one such polymer is described as follows:

Example 4

Step 1: Ethoxylation

Diallylamine (160 g, 1.65 moles) was dissolved in methanol (160 ml) under argon and then heated to 45°C. Ethylene oxide was then added for 2.5 hours. Methanol was then removed by heating the reaction mixture to 100°C *in vacuo*. To the residue was added sodium hydride (6.6 g, 0.165 moles) with stirring until the evolution of hydrogen ceased. Ethylene oxide was then added until the degree of ethoxylation (n) was 7.

Step 2: Quaternization

The crude ethoxylated diallylamine (375 g, 0.6 moles) from step 1 was dissolved in an equal volume of 1 *N* methanolic NaOH and then methyl bromide was added. This methyl bromide addition was continued until H—NMR analysis showed complete disappearance of the methylene hydrogens adjacent to the tertiary nitrogen. Additional portions of 1 *N* methanolic NaOH were added as needed to maintain the pH of the reaction mixture at 9. The methanol was removed, yielding a damp mass. This damp mass was washed with several portions of dichloromethane. The combined washes were concentrated to yield the desired quaternized compound (433.7 g).

Step 3: Sulfonation

The quaternized compound (433 g, 0.68 moles) from step 2 was dissolved in dichloromethane (1000 ml) and cooled to 10°C in an ice water bath. To this mixture was added chlorosulfonic acid (113.3 g, 0.96 moles) at a rate such that the temperature of the reaction mixture did not exceed 15°C. When addition of the acid was complete, the reaction mixture was stirred for an additional 0.5 hours. The reaction mixture was then poured onto 5*N* NaOH (80 g, 2.0 moles) and ice. The two phases were separated, and, after drying, the organic phase was concentrated to an oil. A 110 g portion of this oil was dissolved in $H_2O$ (2000 ml) and treated with Rexyn mixed bed resin until the conductivity fell below 1 μmho per cm. Filtration (to remove the resin) and concentration yielded the desired zwitterionic monomer (25.4 g).

Step 4: Polymerization

The zwitterionic monomer (25 g) from step 3 was mixed with $D_2O$ (20 ml) and heated to 95°C under argon for 1 hour. Tert-butylhydroperoxide (25 drops) was then added and the reaction continued at 90°C for 18 hours. Then 20 more drops of the hydroperoxide was added. After heating 3 more days, water was removed *in vacuo* (50°—60°C at pressure of 133.3 Pa (0.1 mm Hg)) to yield 27.1 g of the crude polymer.

Detergent Surfactants

The amount of detergent surfactant included in the detergent compositions of the present invention can vary from 1 to 75% by weight of the composition depending upon the detergent surfactant(s) used, the type of composition to be formulated (e.g. granular, liquid) and the effects desired. Preferably, the detergent surfactant(s) comprises from 10 to 50% by weight of the composition. The detergent surfactant can be nonionic, anionic, ampholytic, zwitterionic, cationic, or a mixture thereof:

A. *Nonionic Surfactants*

Suitable nonionic surfactants for use in detergent compositions of the present invention are generally disclosed in U.S. Patent 3,929,678 to Laughlin et al., issued December 30, 1975 at column 13, line 14 through column 16, line 6. Classes of nonionic surfactants included are:

1. The polyethyleneoxide condensates of alkyl phenols. These compounds include the condensation products of alkyl phenols having an alkyl group containing from 6 to 12 carbon atoms in either a straight chain or branched chain configuration with ethylene oxide, the ethylene oxide being present in an amount equal to 5 to 25 moles of ethylene oxide per mole of alkyl phenol. The alkyl substituent in such compounds can be derived, for example, from polymerized propylene or diisobutylene. Examples of compounds of this type include nonyl phenol condensed with 9.5 moles of ethylene oxide per mole of nonyl phenol; dodecylphenol condensed with 12 moles of ethylene oxide per mole of phenol; dinonyl phenol condensed with 15 moles of ethylene oxide per mole of phenol; and diisooctyl phenol condensed with 15 moles of ethylene oxide per mole of phenol. Commercially available nonionic surfactants of this type include Igepal CO—630, marketed by the GAF Corporation, and Triton X—45, X—114, X—100, and X—102, all marketed by the Rohm & Haas Company.

2. The condensation products of aliphatic alcohols with from 1 to 25 moles of ethylene oxide. The alkyl chain of the aliphatic alcohol can either be straight or branched, primary or secondary, and generally contains from 8 to 22 carbon atoms. Examples of such ethoxylated alcohols include the condensation product of myristyl alcohol condensed with 10 moles of ethylene oxide per mole of alcohol; and the condensation product of 9 moles of ethylene oxide with coconut alcohol (a mixture of fatty alcohols with alkyl chains varying in length from 10 to 14 carbon atoms). Examples of commercially available nonionic surfactants of this type include Tergitol 15—S—9, marketed by Union Carbide Corporation, Neodol 45—9, Neodol 23—6.5, Neodol 45—7, and Neodol 45—4, marketed by Shell Chemical Company, and Kyro EOB, marketed by The Proctor & Gamble Company.

3. The condensation products of ethylene oxide with a hydrophobic base formed by the condensation of propylene oxide with propylene glycol. The hydrophobic portion of these compounds has a molecular weight of from 1500 to 1800 and exhibits water insolubility. The addition of polyoxyethylene moieties to this hydrophobic portion tends to increase the water solubility of the molecule as a whole, and the liquid character of the product is retained up to the point where the polyoxyethylene content is 50% of the total weight of the condensation product, which corresponds to condensation with up to 40 moles of ethylene oxide. Examples of compounds of this type include certain of the commercially available Pluronic surfactants, marketed by Wyandotte Chemical Corporation.

4. The condensation products of ethylene oxide with the product resulting from the reaction of

propylene oxide and ethylenediamine. The hydrophobic moiety of these products consists of the reaction product of ethylenediamine and excess propylene oxide, the moiety having a molecular weight of from 2500 to 3000. This hydrophobic moiety is condensed with ethylene oxide to the extent that the condensation product contains from 40% to 80% by weight of polyoxyethylene and has a molecular weight of from 5,000 to 11,000. Examples of this type of nonionic surfactant include certain of the commercially available Tetronic compounds, marketed by Wyandotte Chemical Corporation.

5. Semi-polar nonionic detergent surfactants which include water-soluble amine oxides containing one alkyl moiety of from 10 to 18 carbon atoms and 2 moieties selected from the group consisting of alkyl groups and hydroxyalkyl groups containing from 1 to 3 carbon atoms; water-soluble phosphine oxides containing one alkyl moiety of from 10 to 18 carbon atoms and 2 moieties selected from the group consisting of alkyl groups and hydroxyalkyl groups containing from 1 to 3 carbon atoms; and water-soluble sulfoxides containing one alkyl moiety of from 10 to 18 carbon atoms and a moiety selected from the group consisting of alkyl and hydroxyalkyl moieties of from 1 to 3 carbon atoms.

Preferred semi-polar nonionic detergent surfactants are the amine oxide detergent surfactants having the formula

$$R^3(OR^4)_x\overset{\overset{O}{\uparrow}}{N}R^5_2$$

wherein $R^3$ is an alkyl, hydroxyalkyl, or alkyl phenyl group or mixtures thereof containing from 8 to 22 carbon atoms; $R^4$ is an alkylene or hydroxyalkylene group containing from 2 to 3 carbon atoms or mixtures thereof; x is from 0 to 3; and each $R^5$ is an alkyl or hydroxyalkyl group containing from 1 to 3 carbon atoms or a polyethylene oxide group containing from one to 3 ethylene oxide groups. The $R^5$ groups can be attached to each other, e.g., through an oxygen or nitrogen atom to form a ring structure.

Preferred amine oxide detergent surfactants are $C_{10}$—$C_{18}$ alkyl dimethyl amine oxide and $C_8$—$C_{12}$ alkoxy ethyl dihydroxy ethyl amine oxide.

6. Alkylpolysaccharides disclosed in EP—A—0 070 074 European Patent Application 82200868.6, R. A. Llenado, filed July 12, 1982, having a hydrophobic group containing from 6 to 30 carbon atoms, preferably from 10 to 16 carbon atoms and a polysaccharide, e.g., a polyglycoside, hydrophilic group containing from $1\frac{1}{2}$ to 10, preferably from $1\frac{1}{2}$ to 3, most preferably from 1.6 to 2.7 saccharide units. Any reducing saccharide containing 5 to 6 carbon atoms can be used, e.g. glucose, galactose and galactosyl moieties can be substituted for the glucosyl moieties. (Optionally the hydrophobic group is attached at the 2, 3, 4 positions thus giving a glucose or galactose as opposed to a glucoside or galactoside). The intersaccharide bonds can be, e.g., between the one position of the additional saccharide units and the 2-, 3-, 4-, and/or 6 positions on the preceding saccharide units.

Optionally, and less desirably, there can be a polyalkyleneoxide chain joining the hydrophobic moiety and the polysaccharide moiety. The preferred alkylene oxide is ethylene oxide.Typical hydrophobic groups include alkyl groups, either saturated or unsaturated, branched or unbranched containing from 8 to 18, preferably from 10 to 16, carbon atoms. Preferably, the alkyl group is a straight chain saturated alkyl group. The alkyl group can contain up to 3 hydroxy groups and/or the polyalkyleneoxide chain can contain up to about 10, preferably less than 5, most preferably 0, alkyleneoxide moieties. Suitable alkyl polysaccharides are octyl, nonyldecyl, undecyldodecyl, tridecyl, tetradecyl, pentadecyl, hexadecyl, heptadecyl, and octadecyl, di-, tri-, tetra-, penta-, and hexaglucosides, galactosides, lactosides, glucoses, fructosides, fructoses, and/or galactoses. Suitable mixtures include coconut alkyl, di-, tri-, tetra, and pentaglucosides and tallow alkyl tetra-, penta-, and hexaglucosides.

The preferred alkylpolyglycosides have the formula

$$R^2O(C_nH_{2n}O)_t(\text{glycosyl})_x$$

wherein $R^2$ is selected from the group consisting of alkyl, alkylphenyl, hydroxyalkyl, hydroxyalkylphenyl, and mixtures thereof in which the alkyl groups contain from 10 to 18, preferably from 12 to 14, carbon atoms; n is 2 or 3, preferably 2; t is from 0 to 10, preferably 0; and x is from $1\frac{1}{2}$ to 10, preferably from $1\frac{1}{2}$ to 3, most preferably from 1.6 to 2.7. The glycosyl is preferably derived from glucose. To prepare these compounds, the alcohol or alkylpolyethoxy alcohol is formed first and then reacted with glucose, or a source of glucose, to form the glucoside (attachment at the 1-position). The additional glycosyl units can then be attached between their 1-position and the peceding glycosyl units 2-, 3-, 4- and/or 6- position, preferably predominantly the 2-position.

7. Fatty acid amide detergent surfactants having the formula:

$$R^6\text{-}\overset{\overset{O}{\parallel}}{C}\text{-}NR^7_2$$

wherein $R^6$ is an alkyl group containing from 7 to 21 (preferably from 9 to 17) carbon atoms and each $R^7$ is selected from the group consisting of hydrogen, $C_1$—$C_4$ alkyl, $C_1$—$C_4$ hydroxyalkyl, and —$(C_2H_4O)_xH$ where x varies from 1 to 3.

Preferred amides are $C_8$—$C_{20}$ ammonia amides, monoethanolamides, diethanolamides, and isopropanol amides.

*B. Anionic Surfactants*

Anionic surfactants suitable in detergent compositions of the present invention are generally disclosed in the U.S. Patent 3,929,678 to Laughlin et al., issued December 30, 1975 at column 23, line 58 through column 29, line 23. Classes of anionic surfactants included are:

1. Ordinary alkali metal soaps such as the sodium, potassium, ammonium and alkylolammonium salts of higher fatty acids containing from 8 to 24 carbon atoms, preferably from 10 to 20 carbon atoms.

2. Water-soluble salts, preferably the alkali metal, ammonium and alkylolammonium salts, of organic sulfuric reaction products having in their molecular structure an alkyl group containing from 10 to 20 carbon atoms and a sulfonic acid or sulfuric acid ester group. (Included in the term "alkyl" is the alkyl portion of acyl groups).

Examples of this group of anionic surfactants are the sodium and potassium alkyl sulfates, especially those obtained by sulfating the higher alcohols ($C_8$—$C_{18}$ carbon atoms) such as those produced by reducing the glycerides of tallow or coconut oil; and the sodium and potassium alkylbenzene sulfonates in which the alkyl group contains from 9 to 15 carbon atoms, in straight chain or branched chain configuration, e.g., those of the type described in U.S. Patents 2,220,099 and 2,477,383. Especially valuable are linear straight chain alkylbenzene sulfonates in which the average number of carbon atoms in the alkyl group is from 11 to 13, abbreviated as $C_{11}$—$C_{13}$LAS.

Preferred anionic surfactants of this type are the alkyl polyethoxylate sulfates, particularly those in which the alkyl group contains from 10 to 22, preferably from 12 to 18 carbon atoms, and wherein the polyethoxylate chain contains from 1 to 15 ethoxylate moieties preferably from 1 to 3 ethoxylate moieties. These anionic detergent surfactants are particularly desirable for formulating heavy-duty liquid laundry detergent compositions.

Other anionic surfactants of this type include sodium alkyl glyceryl ether sulfonates, especially those ethers of higher alcohols derived from tallow and coconut oil; sodium coconut oil fatty acid monoglyceride sulfonates and sulfates; sodium or potassium salts of alkyl phenol ethylene oxide ether sulfates containing from 1 to 10 units of ethylene oxide per molecule and wherein the alkyl groups contain from 8 to 12 carbon atoms; and sodium or potassium salts of alkyl ethylene oxide ether sulfates containing 1 to 10 units of ethylene oxide per molecule and wherein the alkyl group contains from 10 to 20 carbon atoms.

Also included are water-soluble salts of esters of alphasulfonated fatty acids containing from 6 to 20 carbon atoms in the fatty acid group and from 1 to 10 carbon atoms in the ester group; water-soluble salts of 2-acyloxy-alkane-1-sulfonic acids containing from 2 to 9 carbon atoms in the acyl group and from 9 to 23 carbon atoms in the alkane moiety; alkyl ether sulfates containing from 10 to 20 carbon atoms in the alkyl group and from 1 to 30 moles of ethylene oxide; water-soluble salts of olefin sulfonates containing from 12 to 24 carbon atoms; and beta-alkyloxy alkane sulfonates containing from 1 to 3 carbon atoms in the alkyl group and from 8 to 20 carbon atoms in the alkane moiety.

3. Anionic phosphate surfactants.

4. N-alkyl substituted succinamates.

*C. Ampholytic Surfactants*

Ampholytic surfactants can be broadly described as aliphatic derivatives of secondary or tertiary amines, or aliphatic derivatives of heterocyclic secondary and tertiary amines in which the aliphatic radical can be straight chain or branched and wherein one of the aliphatic substituents contains from 8 to 18 carbon atoms and at least one contains an anionic water-solubilizing group, e.g., carboxy, sulfonate, sulfate. See U.S. Patent 3,929,678 to Laughlin et. al., issued December 30, 1975 at column 19, lines 18—35 for examples of ampholytic surfactants.

*D. Zwitterionic Surfactants*

Zwitterionic surfactants can be broadly described as derivatives of secondary and tertiary amines, derivatives of heterocyclic secondary and tertiary amines, or derivatives of quaternary ammonium, quaternary phosphonium or tertiary sulfonium compounds. See U.S. Patent 3,929,678 to Laughlin et al., issued December 30, 1975 at column 19, line 38 through column 22, line 48 for examples of zwitterionic surfactants.

*E. Cationic Surfactants*

Cationic surfactants can also be included in detergent compositions of the present invention. Suitable cationic surfactants include the quaternary ammonium surfactants having the formula:

$$[R^2(OR^3)_y][R^4(OR^3)_y]_2R^5N^+X^-$$

wherein $R^2$ is an alkyl or alkyl benzyl group having from 8 to 18 carbon atoms in the alkyl chain; each $R^3$ is selected from the group consisting of $-CH_2CH_2-$, $-CH_2CH(CH_3)-$, $-CH_2CH(CH_2OH)-$, $CH_2CH_2CH_2-$, and mixtures thereof; each $R^4$ is selected from the group consisting of $C_1-C_4$ alkyl, $C_1-C_4$ hydroxyalkyl, benzyl, ring structures formed by joining the two $R^4$ groups, $-CH_2CHOHCHOHCOR^6CHOHCH_2OH$ wherein $R^6$ is any hexose or hexose polymer having a molecular weight less than 1000, and hydrogen when y is not 0; $R^5$ is the same as $R^4$ or is an alkyl chain wherein the total number of carbon atoms of $R^2$ plus $R^5$ is not more than 18; each y is from 0 to 10 and the sum of the y values is from 0 to 15; and X is any compatible anion.

Preferred of the above are the alkyl quaternary ammonium surfactants, especially the mono-long chain alkyl surfactants described in the above formula when $R^5$ is selected from the same groups as $R^4$. The most preferred quaternary ammonium surfactants are the chloride, bromide and methylsulfate $C_8-C_{16}$ alkyl trimethylammonium salts, $C_8-C_{16}$ alkyl di(hydroxyethyl)methylammonium salts, the $C_8-C_{16}$ alkyl hydroxyethyldimethylammonium salts, and $C_8-C_{16}$ alkyloxypropyl trimethylammonium salts. Of the above, decyl trimethylammonium methylsulfate, lauryl trimethylammonium chloride, myristyl trimethylammonium bromide and coconut trimethylammonium chloride and methylsulfate are particularly preferred.

## Detergent Builders

Detergent compositions of the present invention can optionally comprise inorganic or organic detergent builders to assist in mineral hardness control. These builders can comprise from 0 to 80% by weight of the composition. When included, these builders typically comprise up to 60% by weight of the detergent composition. Built liquid formulations preferably comprise from 10 to 25% detergent builder while built granular formulations preferably comprise from 10 to 50% by weight detergent builder.

Suitable detergent builders include crystalline aluminosilicate ion exchange materials having the formula:

$$Na_z[(AlO_2)_z \cdot (SiO_2)_y \cdot xH_2O$$

where z and y are at least 6, the mole ratio of z to y is from 1.0 to 0.5; and x is from 10 to 264. Amorphous hydrated aluminosilicate materials useful herein have the empirical formula:

$$M_z(zAlO_2 \cdot ySiO_2)$$

wherein M is sodium, potassium. ammonium or substituted ammonium, z is from 0.5 to 2; and y is 1; this material having a magnesium ion exchange capacity of at least 50 milligrams equivalents of $CaCO_3$ hardness per gram of anhydrous aluminosilicate.

The aluminosilicate ion exchange builder materials are in hydrated form and contain from 10% to 28% of water by weight if crystalline, and potentially even higher amounts of water if amorphous. Highly preferred crystalline aluminosilicate ion exhange materials contain from 18% to 22% water in their crystal matrix. The preferred crystalline aluminosilicate ion exchange materials are further characterized by a particle size diameter of from 0.1 μm to 10 μm. Amorphous materials are often smaller, e.g., down to less than 0.01 μm. More preferred ion exchange materials have a particle size diameter of from 0.2 μm to 4 μm. The term "particle size diameter" represents the average particle size diameter of a given ion exchange material as determined by conventional analytical techniques such as, for example, microscopic determination utilizing a scanning electron microscope. The crystalline aluminosilicate ion exchange materials are usually further characterized by their calcium ion exchange capacity, which is at least 200 mg equivalent to $CaCO_3$ water hardness/g of aluminosilicate, calculated on an anhydrous basis, and which generally is in the range of from 300 mg eq./g to 352 mg eq./g. The aluminosilicate ion exchange materials are still further characterized by their calcium ion exchange rate which is at least 2 grains $CA^{++}$/3.785 l (gallon)/minute/gram/3.785 l (gallon) of aluminosilicate (anhydrous basis), and generally lies within the range of from 2 grains/3.785 l (gallon)/minute/gram/3.785 l (gallon) to 6 grains/3.785 l (gallon)/minute/gram/3.785 l (gallon), based on calcium ion hardness. Optimum aluminosilicates for builder purposes exhibit a calcium ion exchange rate of at least 4 grains/3.785 l (gallon)/minute/gram/3.785 l (gallon).

The amorphous aluminosilicate ion exchange materials usually have a $Mg^{++}$ exchange capacity of at least 50 mg eq. $CaCO_3$/g (12 mg $Mg^{++}$/g) and a $Mg^{++}$ exchange rate of at least 1 grain/3.785 l (gallon)/minute/gram/3.785 l (gallon). Amorphous materials do not exhibit an observable diffraction pattern when examined by Cu radiation (0.154 nm (1.54 Angstrom Units)).

Useful aluminosilicate ion exchange materials are commercially available. These aluminosilicates can be crystalline or amorphous in structure and can be naturally-occurring aluminosilicates or synthetically derived. A method for producing aluminosilicate ion exchange materials is disclosed in U.S. Patent 3,985,669 to Krummel, et al., issued October 12, 1976. Preferred synthetic crystalline aluminosilicate ion exchange materials useful herein are available under the designations Zeolite A, Zeolite P (B), and Zeolite X. In an especially preferred embodiment, the crystalline aluminosilicate ion exchange material has the formula:

$$Na_{12}[(AlO_2)_{12}(SiO_2)_{12}] \cdot xH_2O$$

wherein x is from 20 to 30, especially 27.

Other examples of detergency builders include the various water-soluble, alkali, metal, ammonium or substituted ammonium phosphates, polyphosphates, phosphonates, polyphosphonates, carbononates, silicates, borates, polyhydroxysulfonates, polyacetates, carboxylates, and polycarboxylates. Preferred are the alkali metal, especially sodium, salts of the above.

Specific examples of inorganic phosphate builders are sodium and potassium tripolyphosphate, pyrophosphate, polymeric metaphate having a degree of polymerization of from 6 to 21, and orthophosphate. Examples of polyphosphonate builders are the sodium and potassium salts of ethylene-1,1-diphosphonic acid, the sodium and potassium salts of ethane 1-hydroxy-1, 1-diphosphonic acid and the sodium and potassium of ethane, 1,1,2-triphosphonic acid. Other phosphorus builder compounds are disclosed in U.S. Patents 3,159,581; 3,213,030; 3,422,021; 3,422,137; 3,400,176 and 3,400,148.

Examples of nonphosphorus, inorganic builders are sodium and potassium carbonate, bicarbonate, sesquicarbonate, tetraborate decahydrate, and silicate having a mole ratio of $SiO_2$ to alkali metal oxide of from 0.5 to 4.0, preferably from 1.0 to 2.4.

Useful water-soluble, nonphosphorus organic builders include the various alkali metal, ammonium and substituted ammonium polyacetates, carboxylates, polycarboxylates and polyhydroxysulfonates. Examples of polyacetate and polycarboxylate builders are the sodium, potassium lithium, ammonium and substituted ammonium salts of ethylenediamine tetraacetic acid, nitrilotriacetic acid, oxydisuccinic acid, mellitic acid, benzene polycarboxylic acids, and citric acid.

Highly preferred polycarboxylate builders are disclosed in U.S. Patent No. 3,308,067 to Diehl, issued March 7, 1967. Such materials include the water-soluble salts of homo- and copolymers of aliphatic carboxylic acids such as maleic acid, itaconic acid, mesaconic acid, fumaric acid, aconitic acid, citraconic acid and methylenemalonic acid.

Other builders include the carboxylated carbohydrates disclosed in U.S. Patent 3,723,322 to Diehl, issued March 28, 1973.

Other useful builders are sodium potassium carboxymethyloxymalonate, carboxymethyloxysuccinate, cis-cyclohexanehexacarboxylate, cis-cyclopentanetetracarboxylate phloroglucinol trisulfonate, water-soluble polyacrylates (having molecular weights of from 2,000 to 200,000 for example), and the copolymers of maleic anhydride with vinyl methyl ether or ethylene.

Other suitable polycarboxylates are the polyacetal, carboxylates disclosed in U.S. Patent 4,144,226, to Crutchfield et al., issued March 13, 1979, and U.S. Patent 4,246,495, to Crutchfield et al., issued March 27, 1979. These polyacetal carboxylates can be prepared by bringing together under polymerization conditions an ester of glyoxylic acid and a polymerization initiator. The resulting polyacetal carboxylate ester is then attached to chemically stable end groups to stabilize the polyacetal carboxylate against rapid depolymerization in alkaline solution, converted to the corresponding salt, and added to a surfactant.

Other useful detergency builder materials are the "seeded builder" compositions disclosed in Belgian Patent No. 798,856, issued October 29, 1973. Specific examples of such seeded builder mixtures are: 3:1 wt. mixtures of sodium carbonate and calcium carbonate having 5 µm particle diameter; 2:7:1 wt. mixtures of sodium sesquicarbonate and calcium carbonate having a particle diameter of 0.5 µm; 20:1 wt. mixtures of sodium sesquicarbonate and calcium hydroxide having a particle diameter of 0.01 µm; and a 3:3:1 wt. mixture of sodium carbonate, sodium aluminate and calcium oxide having a particle diameter of 5 µm.

## Other Optional Detergent Ingredients

Other optional ingredients which can be included in detergent compositions of the present invention, in their conventional art-established levels for use (i.e. from 0 to 20%), include solvents, bleaching agents, bleach activators, soil-suspending agents, corrosion inhibitors, dyes, fillers, optical brighteners, germicides, pH adjusting agents (monoethanolamine, sodium carbonate, sodium hydroxide), enzymes, enzyme-stabilizing agents, perfumes, fabric softening components or static control agents.

## Detergent Formulations

Granular formulations embodying the detergent compositions of the present invention can be formed by conventional techniques, i.e. by slurrying the individual components in water and then atomizing and spray-drying the resultant mixture, or by pan or drum granulation of the ingredients. Granular formulations preferably comprise from 10 to 30% detergent surfactant, usually anionic.

Liquid formulations embodying the detergent compositions can be built or unbuilt. If unbuilt, these compositions conventionally contain 15 to 50% total surfactant, from 0 to 10% of an organic base such as a mono-, di-, or tri-alkanol amine, a neutralization system such as an alkali metal hydroxide and a lower primary alcohol such as ethanol or isopropanol, and approximately 20 to 80% water. Such compositions are normally homogeneous single phase liquids of low viscosity (100 to 150 mPa.s at 23.9°C (centipoise at 75°F)).

Built liquid detergent compositions can be in the form of single phase liquids provided that the builder is solubilized in the mixture at its level of use. Such liquids conventionally contain 10 to 25% total surfactant, 10 to 25% builder which can be organic or inorganic, 3 to 10% of a hydrotrope system and 40 to 77% water. Liquids of this type also have a low viscosity (100 to 150 mPa.s at 23.9°C (centipoise at 75°F)). Built liquid detergents incorporating components that form heterogeneous mixtures (or levels of builder

that cannot be completely dissolved) can also comprise detergent compositions of the present invention. Such liquids conventionally employ viscosity modifiers to produce systems having plastic shear characteristics to maintain stable dispersions and to prevent phase separation or solid settlement.

Near Neutral Wash pH Detergent Formulations

While the detergent compositions of the present invention are operative within a range of wash pHs (e.g. from 5 to 12), they are particularly suitable when formulated to provide a near neutral wash pH, i.e. an initial pH of from 6.0 to 8.5 at a concentration of from 0.1 to 2% by weight in water at 20°C. Near neutral wash pH formulations are better than enzyme stability and for preventing stains from setting. In such formulations, the wash pH is preferably from 7.0 to 8.5, and more preferably from 7.5 to 8.0.

Preferred near neutral wash pH detergent formulations are disclosed in EP—A—0095 205 (European Patent Application 83200688.6), J.H.M. Wertz & P.C.E. Goffinet, filed on May 16, 1983. These preferred formulations comprise:

(a) from 2 to 60% (preferably from 10 to 25%; by weight of an anionic synthetic surfactant as previously defined;

(b) from 0.25 to 12% (preferably from 1 to 4%) by weight of a cosurfactant selected from the group consisting of:

(1) quaternary ammonium surfactants having the formula:

$$[R^2(OR^3)_y][R^4(OR^3)_y]_2R^5N^+X^-$$

wherein $R^2$, each $R^3$, $R^4$, $R^5$, X and y are are previously defined; each y is from 0 to 10 and the sum of the y values is from 0 to 15; and X is any compatible anion;

(ii) diquaternary ammonium surfactants having the formula:

$$[R^2(OR^3)_y][R^4(OR^3)_y]_2N^+R^3N^+R^5[R^4(OR^3)_y]_2\ (X^-)_2$$

wherein $R^2$, $R^3$, $R^4$, y and X are as defined above; particularly preferred are the $C_8$—$C_{16}$ alkyl pentamethylethylenediamine chloride, bromide and methylsulfate salts;

(iii) amine surfactants having the formula:

$$[R^2(OR^3)_y][R^4(OR^3)_y]R^5N$$

wherein $R^2$, $R^3$, $R^4$, $R^5$ and y are as defined above; particularly preferred are the $C_{12}$—$C_{16}$ alkyl dimethyl amines;

(iv) diamine surfactants having the formula:

$$[R^2(OR^3)_y][R^4(OR^3)_y]NR^3NR^5[R^4(OR^3)_y]$$

wherein $R^2$, $R^3$, $R^4$, $R^5$ and y are as defined above; particularly preferred are the $C_{12}$—$C_{16}$ alkyl dimethyl diamines;

(v) amine oxide surfactants having the formula:

$$[R^2(OR^3)_y][R^4(OR^3)_y]R^5N{\rightarrow}0$$

wherein $R^2$, $R^3$, $R^4$, $R^5$ and y are as defined above; particularly preferred are the $C_{12}$—$C_{16}$ alkyldimethyl amine oxides; and

(vi) di(amine oxide) surfactants having the formula:

$$[R^2(OR^3)_y][R^4(OR^3)_y]\underset{\substack{\downarrow\\ O}}{N}R^3\underset{\substack{\downarrow\\ O}}{N}R^5[R^4(OR^3)_y]$$

wherein $R^2$, $R^3$, $R^4$, $R^5$ and y are as defined above; preferred are the $C_{12}$—$C_{16}$ alkyl trimethylethylene di(amine oxides) and (c) from 5% to 40% by weight (preferably 7 to 30% by weight, and most preferably from 10 to 20% by weight) of a fatty acid containing from 10 to 22 carbon atoms (preferably a $C_{10}$—$C_{14}$ saturated fatty acid or mixture thereof); the mole ratio of the anionic surfactant to the cosurfactant being at least 1 and preferably from 2:1 to 20:1.

Such compositions also preferably contain from 3 to 15% by weight of an ethoxylated alcohol or ethoxylated alkyl phenol (nonionic surfactants) as previously defined. Highly preferred compositions of this type also preferably contain from 2 to 10% by weight of citric acid and minor amounts (e.g., less than 20% by weight) of neutralizing agents, buffering agents, phase regulants, hydrotropes, enzymes, enzyme stabilizing agents, polyacids, suds, regulants, opacifiers, antioxidants, bactericides, dyes, perfumes and brighteners, such as those described in U.S. Patent 4,285,841 to Barrat et al., issued August 25, 1981.

Special Embodiments of Detergent Compositions
According to the Present Invention

A. Granular Detergent Composition (TIDE)

B. Liquid Detergent Composition (WORLD LIQUID)

Specific Embodiments of Detergent Compositions
According to the Present Invention

Embodiment I

The following embodiments illustrate, but are not limiting of, detergent compositions of the present invention:

A granular detergent composition is as follows:

| Component | Wt % |
|---|---|
| Polyurethane of Example 1 | 1.0 |
| Sodium $C_{14}$—$C_{15}$ alkylethoxysulfate | 10.7 |
| $C_{13}$ linear alkyl benzene sulfonic acid | 4.3 |
| $C_{12}$—$C_{14}$ alkylpolyethoxylate (6) | 0.5 |
| Sodium toluene sulfonate | 1.0 |
| Sodium tripolyphosphate | 32.9 |
| Sodium carbonate | 20.3 |
| Sodium silicate | 5.8 |
| Minors and water | Balance to 100 |

The components are added together with continuous mixing to form an aqueous slurry which is then spray dried to form the composition. Instead of the polyurethane, the random copolymer of Example 2, the PEA of Example 3a, the PEI of Example 3b or the diallylamine polymer of Example 4 can be substituted therefor.

Embodiment II

A liquid detergent composition is as follows:

| Component | Wt. % |
|---|---|
| Random Copolymer of Example 2 | 1.0 |
| Sodium $C_{14}$—$C_{15}$ alkyl polyethoxy (2.5) sulfate | 8.3 |
| $C_{12}$—$C_{14}$ alkyl dimethyl amine oxide | 3.3 |
| Sodium toluene sulfonate | 5.0 |
| Monoethanolamine | 2.3 |
| Sodium nitrilotriacetate | 18.2 |
| Minors and water | Balance to 100 |

The components are added together with continuous mixing to form the composition. Instead of the random copolymer, the polyurethane of Example 1, the PEA of Example 3a, the PEI of Example 3b or the diallylamine Polymer of Example 4 can be substituted therefor.

Embodiments III and IV

Liquid detergent compositions are as follows:

| Component | Wt. % III | Wt. % IV |
|---|---|---|
| PEA of Example 3a | 1.5 | 1.5 |
| $C_{14}$—$C_{15}$ alkylethoxysulfuric acid | 10.8 | — |
| $C_{14}$—$C_{15}$ alkylpolyethoxy (2.25) sulfuric acid | — | 10.8 |
| $C_{13}$ linear alkylbenzene sulfonic acid | 7.2 | 7.2 |
| $C_{12}$ alkyl trimethylammoniun chloride | 1.2 | 1.2 |
| $C_{12}$—$C_{13}$ alcohol polyethoxylate (6.5) | 6.5 | 6.5 |
| Coconut fatty acid | 15.0 | 15.0 |
| Citric acid monohydrate | 6.9 | 4.0 |
| Diethylenetriamine pentaacetic acid | 0.9 | 0.9 |
| Protease enzyme | 0.8 | 0.8 |
| Amylase enzyme | 0.3 | 0.3 |
| Monoethanolamine | 3.6 | 2.0 |
| Triethanolamine | 3.0 | 4.0 |
| Sodium hydroxide | — | 2.0 |
| Potassium hydroxide | — | 2.8 |
| 1,2-Propanediol | 5.0 | 5.0 |
| Ethanol | 3.0 | 7.0 |
| Sodium formate | 1.0 | 1.0 |
| Sodium toluene sulfonate | 5.0 | — |
| Minors and water | Balance to 100 | |

Embodiment IV is prepared by adding the components together with continous mixing, in the following order to produce a clear liquid: a paste premix of the alkylbenzene sulfonic acid, 0.9 parts of the sodium hydroxide, propylene glycol, and 2.3 parts of the ethanol; a paste premix of the alkylpolyethoxysulfuric acid, 1.1 parts of the sodium hydroxide and 3.1 parts of the ethanol; alcohol polyethoxylate; premix of monoethanolamine, triethanolamine and brighteners, 1.5 parts potassium hydroxide; balance of the ethanol; citric acid; formate; 1.4 parts potassium hydroxide; fatty acid; pentaacetic acid; alkyl trimethylammonium chloride; adjust pH to about 8.4 with potassium hydroxide, water or citric acid; enzymes; PEA (50% aqueous solution); and perfume. Embodiment III can be prepared in a similar manner. Instead of the PEA, the polyurethane of Example 1, the random copolymer of Example 2, the PEI of Example 3b or the diallylamine polymer of Example 4 can be substituted therefor.

Embodiment V

A liquid detergent composition is as follows:

| Component | Wt. % |
|---|---|
| PEI of Example 3 | 1.0 |
| Sodium $C_{12}$ alkylpolyethoxy (3) sulfate | 12.6 |
| $C_{12}$—$C_{13}$ alcohol polyethoxylate (6.5) | 23.4 |
| Monoethanolamine | 2.0 |
| Ethanol | 9.0 |
| Citric acid monohydrate | 0.8 |
| Minors and water | Balance to 100 |

The components are added together with continuous mixing to form the composition. Instead of the PEI, the polyurethane of Example 1, the random copolymer of Example 2, or the diallylamine polymer of Example 4 can be substituted therefor.

**Claims**

1. A water-soluble zwitterionic polymer clay soil removal/anti-redeposition properties, which comprise a polymer backbone, at least 2 M groups and at least one L—X group, wherein M is a cationic group attached to or integral with said backbone and contains an N+ positively charged center; X is an anionic group, or a mixture of anionic and nonionic groups; and L is a hydrophilic chain connecting groups M and X or connecting X to said backbone; L also contains the polyoxyalkylene moiety $—[(R'O)_m(CH_2CH_2O)_n]—$, wherein R' is $C_3$—$C_4$ alkylene or hydroxyalkylene, m and n are numbers such that the moiety $—(CH_2CH_2O)_n—$ comprises at least 50% by weight of said polyoxyalkylene moiety, and n is at least 3.

2. A polymer according to Claim 1 wherein said backbone is selected from the group consisting of the polyurethanes, the polyesters, the polyethers, the polyamides, the polyimides, the polyacrylates, the polyacrylamides, the polyvinylethers, the polyalkylenes, the polyalkarylenes, the polyalkyleneamines, the polyalkyleneimines, the polyvinylamines, the polyallylamines, and the polydiallylamines, polyvinylpyridines, polyaminotriazoles, polyvinyl alcohol, aminopolyureylenes and mixtures thereof.

3. A polymer according to Claim 2 wherein the ratio of groups M to anionic groups X is from 1:2 to 100:1.

4. A polymer according to Claim 3 wherein units of the polymer containing groups M and L—X comprise from 50 to 100% of the polymer.

5. A polymer according to Claim 4 wherein the number of groups M and L—X are each from 3 to 40.

6. A polymer according to Claim 4 wherein m and n are numbers such that the moiety $-(CH_2CH_2O)_n-$ comprises at least 85% by weight of said polyoxyalkylene moiety.

7. A polymer according to Claim 6 wherein m is o and n i at least 12.

8. A polymer according to Claim 7 wherein X is $OSO^-$ or $SO^-$, or a mixture thereof with H.

9. A polymer according to Claim 1 which comprises units having the formulas I, II, III.

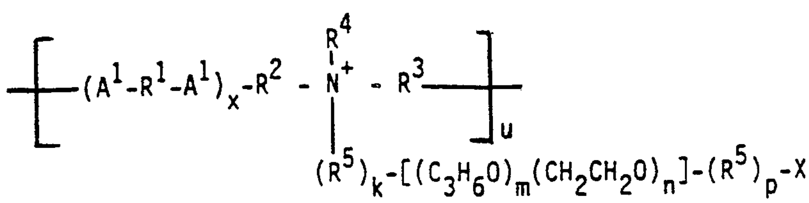

I

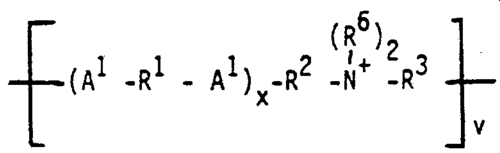

II

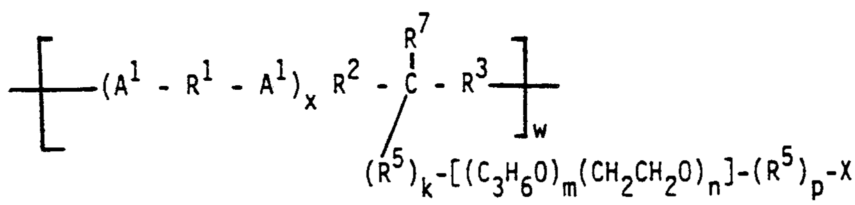

III

wherein $A^1$ is 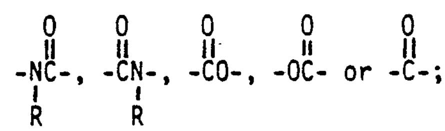

R is H or $C_1$—$C_4$ alkyl or hydroxyalkyl; $R^1$ is $C_2$—$C_{12}$ alkylene, hydroxyalkylene, alkenylene, cycloalkylene, arylene or alkarylene, or a $C_2$—$C_3$ oxyalkylene moiety having from 2 to 20 oxyalkylene units provided no O—O or N—O bonds are formed with $A^1$; when x is 1, $R^2$ is $-R^5-$ except when $A^1$ is

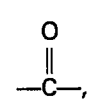

or is $-(OR^8)_y-$ or $-OR^5-$ provided that no O—O or N—O bonds are formed with $A^1$, and $R^3$ is $-R^5$, except when $A^1$ is

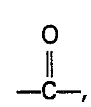

or is $-(R^8O)-_y$ or $-R^5O-$ provided that no O—O or O—N bonds are formed with $A^1$; when x is O, $R^2$ is

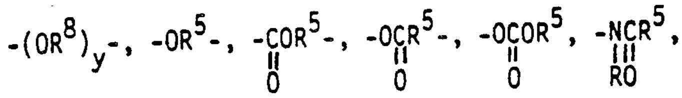

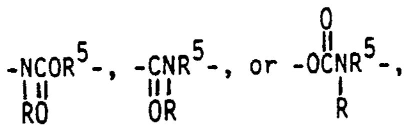

or

and $R^3$ is $-R^5-$;

$R^4$ is $C_1$—$C_4$ alkyl or hydroxyalkyl, $-(R^8O)_q-R^9$, or the moiety $-(R^5)_k-[(C_3H_6O)_m(CH_2CH_2O)_n]-(R^5)_p-X$; $R^5$ is $C_1$—$C_{12}$ alkylene, hydroxyalkylene, alkenylene, arylene, or alkarylene; each $R^6$ is $C_1$—$C_4$ alkyl or hydroxyalkyl, $-(R^8O)_q-R^9$, or two $R^6$ together form the moiety $-(CH_2)_r-A^2-(CH_2)_s-$, where $A^2$ is —O— or $-CH_2-$; $R^7$ is H or $R^4$; $R^8$ is $C_2$—$C_3$ alkylene or hydroxyalkylene; $R^9$ is H, —CR, —R, or a mixture thereof; X is $SO_3^-$, $OSO_3^-$ or $CO_2^-$; k is 0 or 1; m is from 0 to 5; n is at least 3; m and n are numbers such that the moiety $-(CH_2CH_2O)_n-$ comprises at least 85% by weight of the moiety $-[(C_3H_6O)_m(CH_2CH_2O)_n]$; p is 1, or 0 only when X is $SO_3^-$; q is from 1 to 100; r is 1 or 2, s is 1 or 2, and r + s is 3 or 4; y is from 2 to 20; the number of u, v and w is such that there are at least 2 N+ centers and at least 2 X groups.

10. A polymer according to claim 9 wherein A′ is

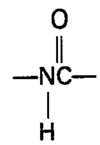

or

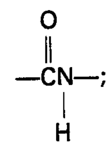

x is 1; $R^1$ is $C_2$—$C_6$ alkylene; $R^2$ is $-(OR^8)y-$ or $OR^5-$; $R^3$ is $-(R^8O)y-$ or $-R^5O-$; $R^4$ and $R^6$ are each methyl or $-(R^8O)_q-H$; $R^5$ is $C_1$—$C_3$ alkylene; $R^7$ is H or $C_1$—$C_3$ alkyl; $R^8$ is ethylene; X is $SO_3^-$ or $OSO_3^-$; k is 0; m is from 0 to 5; p is 1; q is from 2 to 40; y is from 2 to 12.

11. A polymer according to Claim 10 wherein v and w are each 0 and u is from 3 to 40.

12. A polymer according to Claim 11 wherein m is 0 and n is at least 12.

13. A polymer according to Claim 1 which comprises units having formulas IV, V and VI:

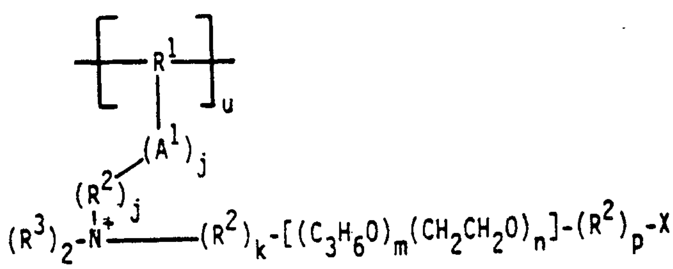

IV

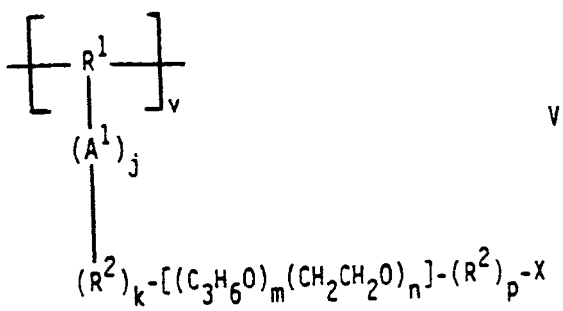

V

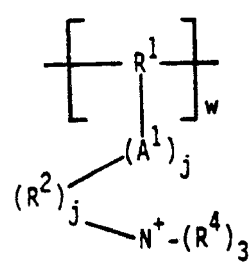

VI

wherein $A^1$ is 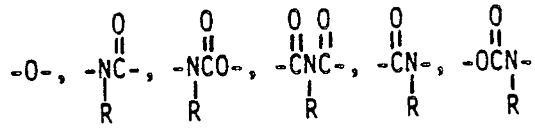

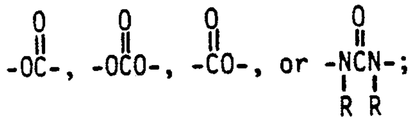

R is H or $C_1$—$C_4$ alkyl or hydroxyalkyl; $R^1$ is substituted $C_2$—$C_{12}$ alkylene, hydroxyalkylene, alkenylene, arylene or alkarylene, or substituted $C_2$—$C_3$ oxyalkylene; each $R^2$ is $C_1$—$C_{12}$ alkylene, hydroxyalkylene, alkenylene, arylene or alkarylene; each $R^3$ is $C_1$—$C_4$ alkyl or hydroxyalkyl, $—(R^5O)_q—R^6$, the moiety $—(R^2)_k—[(C_3H_6O)_m(CH_2CH_2O)_n]—(R^2O)_p—X$, or two $R^3$ together form the moiety $—(CH_2)_r—A^2—(CH_2)_s—$, wherein $A^2$ is —O— or $—CH_2—$; each $R^4$ is $C_1$—$C_4$ alkyl or hydroxyalkyl, $—(R^5O)_q—R^6$, or two $R^4$ together form the moiety $—(CH_2)_r—A^2—(CH_2)_s—$); $R^5$ is $C_2$—$C_3$ alkylene or hydroxyalkylene; $R^6$ is H,

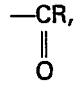

—R or a mixture thereof; X is $SO_3^-$, $OSO_3^-$ or $CO_2^-$; j is 1 or 0; k is 1 or 0; m is from 0 to 5; n is at least 3; m and n are numbers such that the moiety $—(CH_2CH_2O)_n)—$ comprises at least 85% by weight of the moiety $—[(C_3H_6O)_m(CH_2CH_2O)_n]—$; p is 1, or 0 only when X is $SO_3^-$; q is from 1 to about 100; r is 1 or 2, s is 1 or 2 and r + s is 3 or 4; the number of u, v and w are such that there are at least 2 N+ centers and at least 2 X groups.

14. A polymer according to Claim 13 wherein $A^1$ is

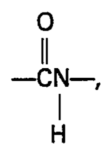

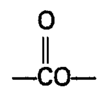

or —O—; R′ is

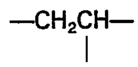 or

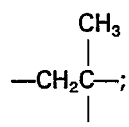

$R^2$ is $C_2$—$C_3$ alkylene; each $R^3$ and $R^4$ are methyl or $—(R^5O)_q—H$; $R^5$ is ethylene; X is $SO_3^-$ or $OSO_3^-$; j is 1; k is 0; p is 1; q is from 2 to 40.

15. A polymer according to Claim 14 wherein v and w are each 0 and u is from 3 to 40.

16. A polymer according to Claim 15 wherein m is 0 and n is at least 12.

17. A polymer according to Claim 1 which comprises units having formulas VII, VIII and IX.

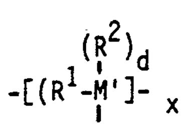 VII

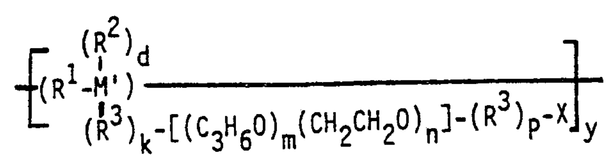 VIII

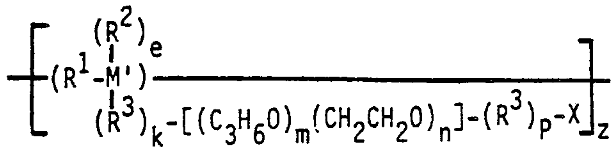 IX

wherein $R^1$ is $C_2$—$C_{12}$ alkylene, hydroxyalkylene, alkenylene, cycloalkylene arylene or alkarylene, or a $C_2$—$C_3$ oxyalkylene moiety having from 2 to 20 oxyalkylene units provided that no O—N bonds are formed; each $R^2$ is $C_1$—$C_4$ alkyl or hydroxyalkyl, $-(R^4O)_q-R^5$, or the moiety $-(R^3)_k-[(C_3H_6O)_m(CH_2CH_2O)_n]-(R^3O)_p-X$; each $R^3$ is $C_1$—$C_{12}$ alkylene, hydroxyalkylene, alkenylene, arylene or alkarylene; $R^4$ is $C_2$—$C_3$ alkylene or hydroxyalkylene; $R^5$ is H,

$$-\underset{\underset{O}{\|}}{C}R,$$

—R or a mixture thereof, wherein R is $C_1$—$C_4$ alkyl or hydroxyalkyl; M′ is an N+ or N center; X is $SO_3^-$, $OSO_3^-$ or $CO_2^-$ or a mixture thereof with H; d is 1 when M′ is N+ and is 0 when M′ is N; e is 2 when M′ is N+, and is 0 when M′ is N; k is 1 or 0, m is from 0 to 5; n is at least 3; m and n are numbers such that the moiety $-(CH_2CH_2O)_n-$ comprises at least 85% by weight of the moiety $-[(C_3H_6O)_m(CH_2CH_2O)_n]-$; p is 1, or 0 only when X is $SO_3^-$ or H; q is from 1 to 100; the number of x, y and z are such that there are at least 10 M′ groups, at least 2 $N^+$ centers, and at least 2 X groups.

18. A polymer according to Claim 17 wherein $R^1$ is $C_2$—$C_3$ alkylene; each $R^2$ is methyl or $-(R^5O)_q-H$; each $R^3$ is $C_1$—$C_3$ alkylene; $R^4$ is ethylene; X is $SO_3^-$ or a mixture thereof with H; k is 0; p is 0; q is from 2 to 40.

19. A polymer according to Claim 18 wherein $R_1$ is ethylene.

20. A polymer according to Claim 19 wherein x + y + z is from 10 to 42.

21. A polymer according to Claim 20 wherein m is 0 and n is at least 12.

22. A polymer according to Claim 1 which comprises units having formulas X and XI:

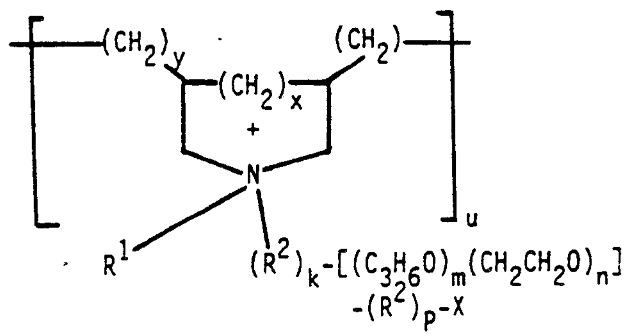

X

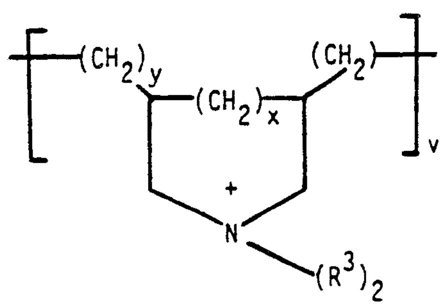

XI

wherein $R^1$ is $C_1$—$C_4$ alkyl or hydroxyalkyl, $-(R^4O)_q-R^5$, or the moiety $-(R^2)_k-[(C_3H_6O)_m(CH_2CH_2O)_n]-(R^2O)_p-X$; each $R^2$ is $C_1$—$C_{12}$ alkylene, hydroxylalkylene, alkenylene, arylene or alkarylene; each $R^3$ is $C_1$—$C_4$ alkyl or hydroxyalkyl, $-(R^4O)_q-R^5$, or two $R^3$ together form the moiety $-(CH_2)_r-A-(CH_2)_s$, wherein A is —O— or $-CH_2-$; $R^4$ is $C_2$—$C_3$ alkylene or hydroxyalkylene; $R^5$ is H,

$$-\underset{\underset{O}{\|}}{C}R,$$

—R or mixture thereof, wherein R is $C_1$—$C_4$ alkyl or hydroxyalkyl; X is $SO_3^-$, $OSO_3^-$ or $CO_2^-$ or mixture thereof with H; k is 1 or 0; m is from 0 to 5; n is at least 3; m and n are numbers such that the moiety $-(CH_2CH_2O)_n-$ comprises at least 85% by weight of the moiety $-[(C_3H_6O)_m(CH_2CH_2O)_n]-$; p is 1, or 0 only when X is $SO_3^-$ or H; q is from 1 to 100; r is 1 or 2, s is 1 or 2, and r + s is 3 or 4; x is 1 or 0; y is 1 when x is 0, and 0 when x is 1; the number of u and v is such that the number of N+ centers is at least 2 and the number of X groups is at least 2.

23. A polymer according to Claim 22 wherein $R^1$ is methyl or $-(R^4O)_q-H$; $R^2$ is $C_2$—$C_3$ alkylene; $R^3$ is methyl or $-(R^4O)_q-H$; $R^4$ is ethylene; X is $SO_3^-$ or a mixture thereof with H; k is 0; p is 0; q is from 2 to 40.

24. A polymer according to Claim 23 wherein v is 0 and u is from 3 to 40.

25. A polymer according to Claim 24 wherein m is 0 and n is at least 12.

26. A detergent composition, which comprises:

(a) from 1 to 75% by weight of a nonionic, an ampholytic, zwitterionic, or cationic detergent surfactant or mixtures thereof; and

(b) from 0.05 to 95% by weight of a water-soluble zwitterionic polymer having clay soil removal/anti-redeposition properties which comprises a polymer backbone, at least 2 M groups and at least one L—X group, wherein M is a cationic group attached to or integral with said backbone and contains an N+ positively charged center; X is an anionic group or a mixture of anionic and nonionic groups; and L is a hydrophilic chain connecting groups M and X or connecting X to said polymer backbone; L also containing the polyoxyalkylene moiety $—[(R'O)_m(CH_2CH_2O)_n]—$, wherein R' is $C_3—C_4$ alkylene or hydroxyalkylene, m and n are numbers such that the moiety $—(CH_2CH_2O)_n)—$ comprises at least 50% by weight of said polyoxyalkylene moiety, and n is at least 3.

27. A composition according to Claim 26 which comprises from 0.1 to 10% by weight of said zwitterionic polymers.

28. A composition according to Claim 27 which comprises from 1 to 3% by weight of said zwitterionic polymers.

29. A composition according to Claim 28 wherein said detergent is selected from the group consisting of nonionic surfactants, anionic surfactants or mixtures thereof.

30. A composition according to Claim 29 which further comprises from 0 to 80% by weight of a detergent builder.

31. A composition according to Claim 26 wherein said backbone is selected from the group consisting of the polyurethanes, the polyesters, the polyethers, the polyamides, the polyimides, the polyacrylates, the polyacrylamides, the polyvinylethers, the polyalkylenes, the polyalkarylenes, the polyalkyleneimines, the polyvinylamines, the polyallylamines, and the polydiallylamines, polyvinylpyridines, polyaminotriazoles, polyvinylalcohol and mixtures thereof.

32. A composition according to Claim 31 wherein the ratio of groups M to anionic groups X is from 1:1 to 50:1.

33. A composition according to Claim 32 wheein units of the polymer containing groups M and L—X comprise from 50 to 100% of the polymer.

34. A composition according to Claim 33 wherein the number of groups M and L—X are each from 3 to 40.

35. A composition according to Claim 33 wherein m and n are numbers such that the moiety $—(CH_2CH_2O)_n—$ comprises at least 85% by weight of said polyoxyalkylene moiety.

36. A composition according to Claim 35 wherein m is 0 and n is at least 12.

37. A composition according to Claim 36 wherein X is $OSO_3^-$ or $SO_3^-$, or a mixture thereof with H.

**Patentansprüche**

1. Ein wasserlösliches, zwitterionisches Polymer mit Tonschmutzentfernungs/Antiwiederabsetzungs-Eigenschaften, welches ein Polymerskelett, wenigstens 2 M-Gruppen und wenigstens eine L—X-Gruppe enthält, worin M eine kationische Gruppe ist, die an das genannte Skelett gebunden oder in dieses eingebaut ist, und ein $N^+$ positiv geladenes Zentrum enthält; X eine anionische Gruppe, oder ein Gemisch aus anionischen und nichtionischen Gruppen ist; und L eine hydrophile Kette ist, welche die Gruppen M und X verbindet, oder X mit dem genannten Skelett verbindet; und L auch den Polyoxyalkylenrest $—[(R'O)_m(CH_2CH_2O)_n]—$ enthält, worin R' $C_3—C_4$-Alkylen oder Hydroxyalkylen ist, m und n solche Zahlen sind, daß der Rest $—(CH_2CH_2O)_n—$ wenigstens 50 Gew.-% des genannten Polyoxyalkylenrestes ausmacht, und n wenigstens 3 ist.

2. Ein Polymer nach Anspruch 1, worin das genannte Skelett aus der Gruppe ausgewählt ist, die aus den Polyurethanen, den Polyestern, den Polyethern, den Polyamiden, den Polyimiden, den Polyacrylaten, den Polyacrylamiden, den Polyvinylethern, den Polyalkylenen, den Polyalkarylenen, den Polyalkylenaminen, den Polyalkyleniminen, den Polyvinylaminen, den Polyallylaminen und den Polydiallylaminen, Polyvinylpyridinen, Polyaminotriazolen, Polyvinylalkohol, Aminopolyureylenen, und Gemischen davon, besteht.

3. Ein Polymer nach Anspruch 2, wobei das Verhältnis von M-Gruppen zu anionischen X-Gruppen 1:2 bis 100:1 beträgt.

4. Ein Polymer nach Anspruch 3, wobei die M- und L—X-Gruppen enthaltenden Polymereinheiten 50 bis 100% des Polymers ausmachen.

5. Ein Polymer nach Anspruch 4, wobei die Anzahl der M- und L—X-Gruppen jeweils 3 bis 40 beträgt.

6. Ein Polymer nach Anspruch 4, wobei m und n solche Zahlen sind, daß der Rest $—(CH_2CH_2O)_n—$ wenigstens 85 Gew.-% des genannten Polyoxyalkylenrestes ausmacht.

7. Ein Polymer nach Anspruch 6, wobei m 0 ist, und n wenigstens 12 ist.

8. Ein Polymer nach Anspruch 7, wobei X $OSO_3^-$ oder $SO_3^-$, oder ein Gemisch davon mit H ist.

9. Ein Polymer nach Anspruch 1, welches Einheiten der Formeln I, II und III:

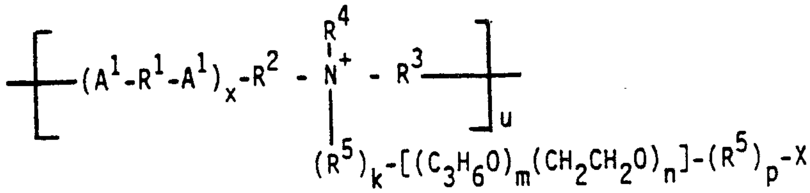

I

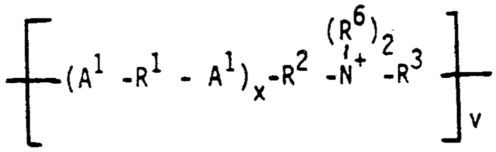

II

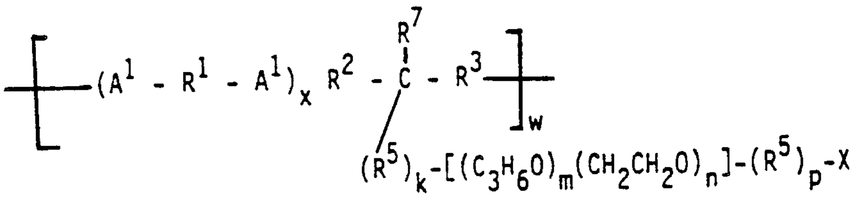

III

enthält worin $A^1$

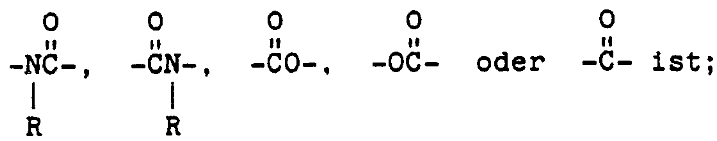

oder ist;

R H oder $C_1$—$C_4$-Alkyl oder Hydroxyalkyl ist; $R^1$ $C_2$—$C_{12}$-Alkylen, Hydroxyalkylen, Alkenylen, Cycloalkylen, Arylen oder Alkarylen, oder ein $C_2$—$C_3$-Oxyalkylenrest mit 2 bis 20 Oxyalkyleneinheiten mit der Maßgabe ist, daß keine O—O- oder N—O-Bindungen mit $A^1$ gebildet sind; wenn x 1 ist $R^2$ für —$R^5$— steht, ausgenommen, wenn $A^1$ für

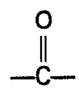

steht, oder —$(OR^8)_y$— oder —$OR^5$— mit der Maßgabe ist, daß keine O—O- oder N—O-Bindungen mit $A^1$ gebildet sind, und $R^3$ für —$R^5$ steht, ausgenommen, wenn $A^1$

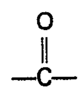

ist, oder —$(R^8O)_y$— oder —$R^5O$— mit der Maßgabe bedeutet, daß keine O—O- oder O—N-Bindungen mit $A^1$ gebildet sind; falls x 0 ist, $R^2$

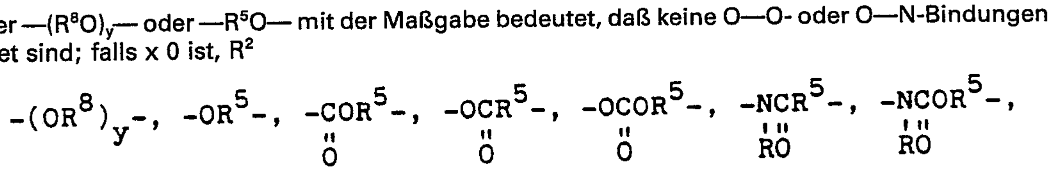

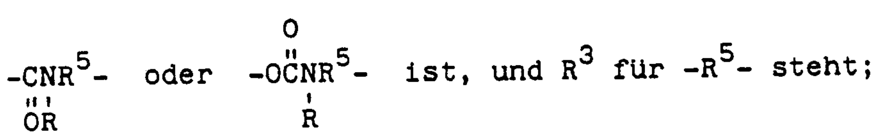

oder ist, und $R^3$ für $-R^5-$ steht;

$R^4$ $C_1$—$C_4$-Alkyl oder Hydroxyalkyl, —$(R^8O)_q$—$R^9$, oder den Rest —$(R^5)_k$—$[(C_3H_6O)_m(CH_2CH_2O)_n]$—$(R^5)_p$—X bedeutet; $R^5$ $C_1$—$C_{12}$-Alkylen, Hydroxyalkylen, Alkenylen, Arylen oder Alkarylen ist; jeder Rest $R^6$ $C_1$—$C_4$-Alkyl oder Hydroxyalkyl oder —$(R^8O)_q$—$R^9$ ist, oder zwei Reste $R^6$ gemeinsam den Rest —$(CH_2)_r$—$A^2$—$(CH_2)_s$— bilden, wobei $A^2$ —O— oder —$CH_2$ ist; $R^7$ H oder $R^4$ ist; $R^8$ $C_2$—$C_3$-Alkylen oder Hydroxyalkylen ist; $R^9$ H,

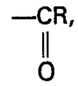

—R, oder ein Gemisch davon, ist; X $SO_3^-$, $OSO_3^-$ oder $CO_2^-$ ist; k 0 oder 1 ist; m 0 bis 5 ist; n wenigstens 3 ist; m und n solche Zahlen sind, daß der Rest $-(CH_2CH_2O)_n-$ wenigstens 85 Gew.-% des Restes $-[(C_3H_6O)_m(CH_2CH_2O)_n]$ ausmacht; p 1 ist, oder nur dann, wenn X für $SO_3^-$ steht, 0 ist; q 1 bis 100 ist; r 1 oder 2 ist; s 1 oder 2 ist, und r + s 3 oder 4 ist; y 2 bis 20 ist; und der Zahlenwert von u, v und w ein solcher ist, daß wenigstens 2 $N^+$-Zentrenen und wenigstens 2 X-Gruppe vorliegen.

10. Ein Polymer nach Anspruch 9, wobei $A^1$

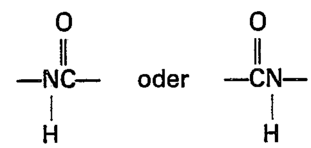

oder

ist; x 1 ist; $R^1$ $C_2$—$C_6$-Alkylen ist; $R^2$ $-(OR^8)_y-$ oder $OR^5-$ ist; $R^3$ $-(R^8O)_y-$ oder $-R^5O-$ ist; $R^4$ und $R^6$ jeweils Methyl oder $-(R^8O)_q-H$ sind; $R^5$ $C_1$—$C_3$-Alkylen ist; $R^7$ H oder $C_1$—$C_3$-Alkyl ist; $R^8$ Ethylen ist X $SO_3^-$ oder $OSO_3^-$ ist; k 0 ist; m 0 bis 5 ist; p 1 ist; q 2 bis 40 ist; und y 2 bis 12 ist.

11. Ein Polymer nach Anspruch 10, wobei v und w jeweils 0 sind, undu 3 bis 40 ist.

12. Ein Polymer nach Anspruch 11, wobei m 0 ist, und n wenigstens 12 ist.

13. Ein Polymer nach Anspruch 1, welches Einheiten der Formeln IV, V und VI:

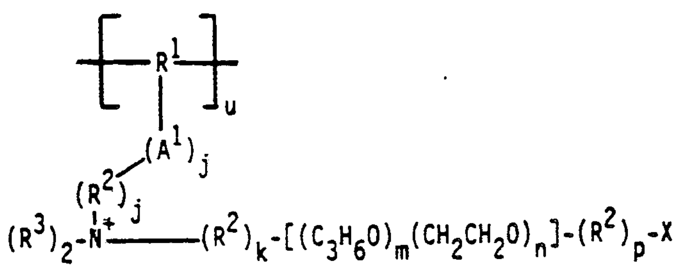

IV

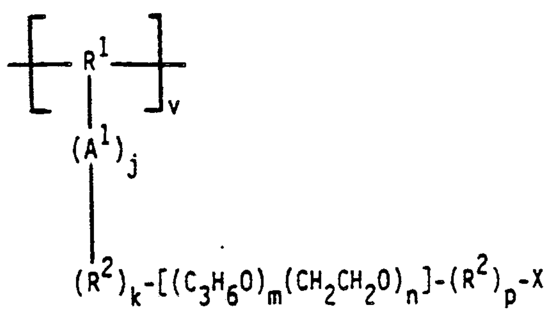

V

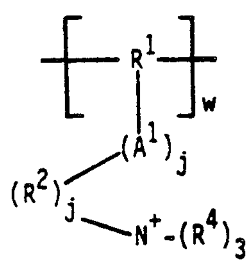

VI

enthält, worin $A^1$

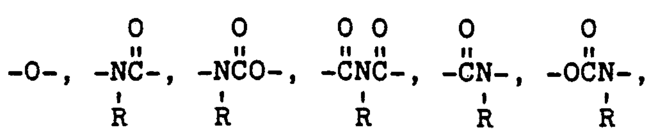

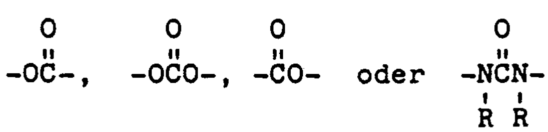

oder ist;

R H oder $C_1$—$C_4$-Alkyl oder Hydroxyalkyl ist; $R^1$ substituiertes $C_2$—$C_{12}$-Alkylen, Hydroxyalkylen, Alkenylen, Arylen oder Alkarylen, oder substituertes $C_2$—$C_3$-Oxyalkylen ist; jeder Rest $R^2$ $C_1$—$C_{12}$-Alkylen, Hydroxyalkylen, Alkenylen, Arylen oder Alkarylen ist; jeder Rest $R^3$ $C_1$—$C_4$-Alkyl oder Hydroxyalkyl, $-(R^5O)_q-R^6$, oder der Rest $-(R^2)_k-[(C_3H_6O)_m(CH_2CH_2O)_n]-(R^2)_p-X$ ist, oder zwei Reste $R^3$ gemeinsam den Rest $-(CH_2)_r-A_2-(CH_2)_s-$ bilden, wobei $A^2$ —O— oder $-CH_2-$ ist; jeder Rest $R^4$ $C_1$—$C_4$-Alkyl oder Hydroxyalkyl oder $-(R^5O)_q-R^6$ ist, oder zwei Reste $R^4$ gemeinsam den Rest $-(CH_2)_r-A^2-(CH_2)_s-$ bilden; $R^5$ $C_2$—$C_3$-Alkylen oder Hydroxyalkylen ist; $R^6$ H,

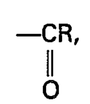

—R, oder ein Gemisch davon, ist; X $SO_3^-$, $OSO_3^-$ oder $CO_2^-$ ist; j 1 oder 0 ist; k 1 oder 0 ist; m 0 bis 5 ist; n wenigstens 3 ist; m und n solche Zahlen sind, daß der Rest $—(CH_2CH_2O)_n—$ wenigstens 85 Gew.-% des Restes $—[(C_3H_6O)_m(CH_2CH_2O)_n]—$ ausmacht; p 1 ist, oder nur dann 0 ist, wenn X $SO_3^-$ ist; q 1 bis 100 ist; r 1 oder 2 ist; s 1 oder 2 ist, und r + s 3 oder 4 ist; und der Zahlenwwert von u, v und w ein solcher ist, daß wenigstens 2 $N^+$-Zentren und wenigstens 2 X-Grupen vorliegen.

14. Ein Polymer nach Anspruch 13, wobei $A^1$

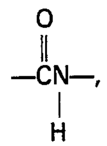

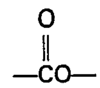

oder —O— ist;

$R^1$ 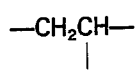 oder 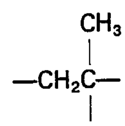 ist;

$R^2$ $C_2$—$C_3$-Alkylen ist; jeder Rest $R^3$ und $R^4$ Methyl oder $—(R^5O)_q—H$ ist; $R^5$ Ethylen ist; X $SO_3^-$ oder $OSO_3^-$ ist; j 1 ist; k 0 ist ; p 1 ist; und q 2 bis 40 ist.

15. Ein Polymer nach Anspruch 14, wobei v und w jeweils 0 sind, und u 3 bis 40 ist.

16. Ein Polymer nach Anspruch 15, wobei m 0 ist, und n wenigstens 12 ist.

17. Ein Polymer nach Anspruch 1, welches Einheiten der Formeln VII, VII und IX:

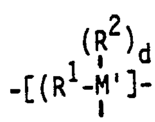 VII

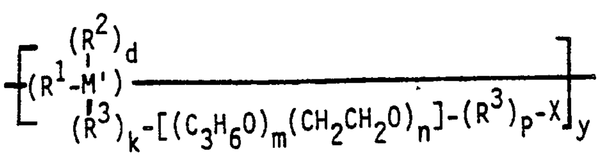 VIII

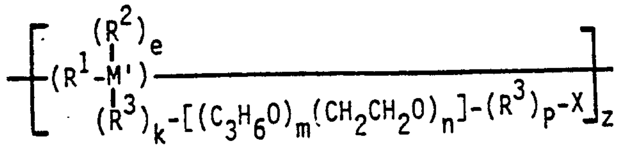 IX

enthält, worin $R^1$ $C_2$—$C_{12}$-Alkylen, Hydroxyalkylen, Alkenylen, Cycloalkylen, Arylen oder Alkarylen, oder ein $C_2$—$C_3$-Oxyalkylenrest mit 2 bis 20 Oxyalkyleneinheiten mit der Maßgabe, daß keine O—N-Bindungen gebildet sind, ist; jeder Rest $R^2$ $C_1$—$C_4$-Alkyl oder Hydroxyalkyl, $—(R^4O)_q—R^5$, oder der Rest $—(R^3)_k—[(C_3H_6O)_m(CH_2CH_2O)_n]—(R^3)_p—X$ ist; jeder Rest $R^3$ $C_1$—$C_{12}$-Alkylen, Hydroxyalkylen, Alkenylen, Arylen oder Alkarylen ist; $R^4$ $C_2$—$C_3$-Alkylen oder Hydroxyalkylen ist; $R^5$ H,

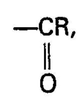

—R, oder ein Gemisch davon, ist, wobei R $C_1$—$C_4$-Alkyl oder Hydroxyalkyl ist; M' eine $N^+$- oder N-Zentrum ist; X $SO_3^-$, $OSO_3^-$ oder $CO_2^-$, oder ein Gemisch davon mit H ist; d 1 ist, falls M' für $N^+$ steht, und 0 ist, falls M' für N steht; e 2 ist, falls M' für $N^+$ steht, und 0 ist, falls M' für N steht; k 1 oder 0 ist m 0 bis 5 ist; n wenigstens 3 ist; m und n solche Zahlen sind, daß der Rest $—(CH_2CH_2O)_n—$ wenigstens 85 Gew.-% des Restes $—[(C_3H_6O)_m(CH_2CH_2O)_n]—$ ausmacht; p 1 ist, oder nur dann 0 ist, falls X $SO_3^-$ oder H ist; q 1 bis 100 ist; und der Zahlenwert von x, y und z ein solcher ist, daß wenigstens 10 M'-Gruppen, wenigstens 2 $N^+$-Zentren und wenigstens 2 X-Gruppen vorliegen.

18. Ein Polymer nach Anspruch 17, wobei $R^1$ $C_2$—$C_3$-Alkylen ist; jeder Rest $R^2$ Methyl oder $—(R^5O)_q—H$ ist; jeder Rest $R^3$ $C_1$—$C_3$-Alkylen ist; $R^4$ Ethylen ist; X $SO_3^-$, oder ein Gemisch davon mit H ist; k 0 ist; p 0 ist; und q 2 bis 40 ist.

19. Ein Polymer nach Anspruch 18, wobei $R^1$ Ethylen ist.

20. Ein Polymer nach Anspruch 19, wobei x + y + z 10 bis 42 ist.

21. Ein Polymer nach Anspruch 20, wobei m 0 ist, und n wenigstens 12 ist.

22. Ein Polymer nach Anspruch 1, welches Einheiten der Formeln X und XI:

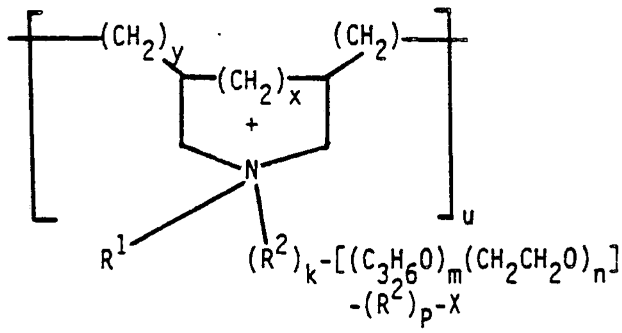

X

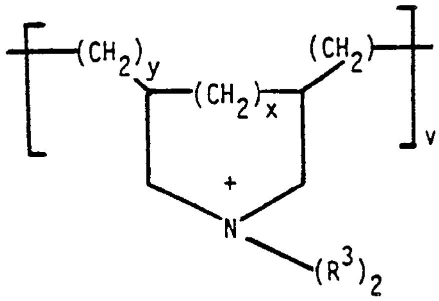

XI

enthält worin $R^1$ $C_1$—$C_4$-Alkyl oder Hydroxyalkyl, —$(R^4O)_q$—$R^5$, oder der Rest —$(R^2)_k$—$[(C_3H_6O)_m(CH_2CH_2O)_n]$—$(R^2)_p$—X ist; jeder Rest $R^2$ $C_1$—$C_{12}$-Alkylen, Hydroxyalkylen, Alkenylen, Arylen oder Alkarylen ist; jeder Rest $R^3$ $C_1$—$C_4$-Alkyl oder Hydroxyalkyl oder —$(R^4O)_q$—$R^5$ ist, oder zwei Reste $R^3$ gemeinsam den Rest —$(CH_2)_r$—A—$(CH_2)_s$ bilden, wobei A —O— oder —$CH_2$— ist; $R^4$ $C_2$—$C_3$-Alkylen oder Hydroxyalkylen ist; $R^5$ H,

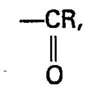

—R, oder ein Gemisch davon, ist, wobei R $C_1$—$C_4$-Alkyl oder Hydroxyalkyl ist; X $SO_3^-$, $OSO_3^-$ oder $CO_2^-$, oder ein Gemisch davon mit H ist; k 1 oder 0 ist; m 0 bis 5 ist; n wenigstens 3 ist; m und n solche Zahlen sind, daß der Rest —$(CH_2CH_2O)_n$— wenigstens 85 Gew.-% des Restes —$[(C_3H_6O)_m(CH_2CH_2O)_n]$— ausmacht; p 1 ist, oder nur dann 0 ist, wenn X $SO_3^-$ oder H ist; q 1 bis 100 ist; r 1 oder 2 ist; s 1 oder 2 ist, und r + s 3 oder 4 ist; x 1 oder 0 ist; y 1 ist falls x 0 bedeutet, und 0 ist, falls x 1 bedeutet; und der Zahlenwert von u und v ein solcher ist, daß die Anzahl der $N^+$-Zentren wenigstens 2 beträgt, und die Anzahl der X-Gruppen wenigstens 2 ist.

23. Ein Polymer nach Anspruch 22, wobei $R^1$ Methyl oder —$(R^4O)_q$—H ist; $R^2$ $C_2$—$C_3$-Alkylen ist; $R^3$ Methyl oder —$(R^4O)_q$—H ist; $R^4$ Ethylen ist; X $SO_3^-$, oder ein Gemisch davon mit H ist; k 0 ist; p 0 ist; und q 2 bis 40 ist.

24. Ein Polymer nach Anspruch 23, wobei v 0 ist, und u 3 bis 40 ist.

25. Ein Polymer nach Anspruch 24, wobei m 0 ist, und n wenigstens 12 ist.

26. Eine Detergenszusammensetzung, welche enthält:

(a) 1 bis 75 Gew.-% eines nichtionischen, ampholytischen, zwitterionischen oder kationischen Detergens-grenzflächenaktiven Mittels, oder von Gemischen davon; und

(b) 0,05 bis 95 Gew.-% eines wasserlöslichen, zwitterionischen Polymers mit Tonschmutzentfernungs/Antiwiederabsetzungs-Eigenschaften, welches ein Polymerskelett, wenigstens 2 M-Gruppen und wenigstens eine L—X-Gruppe umfaßt, worin M eine an das genannte Skelett gebudene oder eine in dieses eingebaute kationische Gruppe ist und ein $N^+$ positiv geladenes Zentrum enthält; X eine anionische Gruppe, oder ein Gemisch aus anionischen und nichtionischen Gruppen ist; und L eine hydrophile Kette ist, welche Gruppen M und X verbindet, oder X mit dem genannten Polymer-skelett verbindet; L auch den Polyoxyalkylenrest —$[(R'O)_m(CH_2CH_2O)_n]$— enthält, wobei R' $C_3$—$C_4$-Alkylen oder Hydroxyalkylen ist, m und n solche Zahlen sind, daß der Rest —$(CH_2CH_2O)_n$— wenigstens 50 Gew.-% des genannten Polyoxyalkylenrestes ausmacht, und n wenigstens 3 ist.

27. Eine Zusammensetzung nach Anspruch 26, welche 0,1 bis 10 Gew.-% des genannten zwitterionischen Polymers enthält.

28. Eine Zusammensetzung nach Anspruch 27, welche 1 bis 3 Gew.-% des genannten zwitterionischen Polymers enthält.

29. Eine Zusammensetzung nach Anspruch 28, wobei das genannte Detergens-grenzflächenaktive Mittel aus der Gruppe ausgewählt ist, die aus nichtionischen grenzflächenaktiven Mitteln, anionischen grenzflächenaktiven Mitteln, oder Mischungen davon, besteht.

30. Eine Zusammensetzung nach Anspruch 29, welche weiterhin 0 bis 80 Gew.-% eines Detergensgerüstoffes enthält.

31. Eine Zusammensetzung nach Anspruch 26, wobei das genannte Skelett aus der Gruppe ausgewählt ist, die aus den Polyurethanen, den Polyestern, den Polyethern, den Polyamiden, den Polyimiden, den Polyacrylaten, den Polyacrylamiden, den Polyvinylethern, den Polyalkylenen, den Polyalkarylenen, den Polyalkyleniminen, den Polyvinylaminen, den Polyallylaminen und den Polydiallylaminen, Polyvinylpyridenen, Polyaminotriazolen, Polyvinylalkohol, und Gemischen davon, besteht.

32. Eine Zusammensetzung nach Anspruch 31, wobei das Verhältnis von M-Gruppen zu anionischen X-Gruppen 1:1 bis 50:1 beträgt.

33. Eine Zusammensetzung nach Anspruch 32, wobei Einheiten des Polymers, die M- und L-X-Gruppen enthalten, 50 bis 100% des Polymers ausmachen.

34. Eine Zusammensetzung nach Anspruch 33, wobei die Anzahl der M- und L—X-Gruppen jeweils 3 bis 40 beträgt.

35. Eine Zusammensetzung nach Anspruch 33, wobei m und n solche Zahlen sind, daß der Rest $—(CH_2CH_2O)_n—$ wenigstens 85 Gew.% des genannten Polyoxyalkylenrestes ausmacht.

36. Eine Zusammensetzung nach Anspruch 35, wobei m 0 ist, und n wenigstens 12 ist.

37. Eine Zusammensetzung nach Anspruch 36, wobei X $OSO_3^-$ oder $SO_3^-$, oder ein Gemisch davon mit H ist.

**Revendications**

1. Polymère zwittérionique soluble dans l'eau ayant des propriétés d'élimination des salissures argileuses et d'antiredéposition, qui comprend un squelette de polymère, au moins deux groupes M et au moins un groupe L—X, dans lequel M est un groupe cationique fixé au squelette au faisant partie de ce squelette et contient un centre $N^+$ chargé positivement; X est un groupe anionique, ou un mélange de groupes anioniques et non ioniques; et L est une chaîne hydrophile reliant les groupes M et X ou reliant X au squelette; L contient aussi le groupement polyoxyalkylène $—[(R'O)_m(CH_2CH_2O)_n]—$, dans lequel R' est un groupe alkylène ou hydroxyalkylène en $C_3—C_4$, m et n sont des nombres tels que le groupement $—(CH_2CH_2O)_n—$ constitue au moins 50% en poids du groupement polyoxyalkylène, et n est au moins égal à 3.

2. Polymère selon la revendication 1, dans lequel la squelette est choisi dans le groupe constitué par les polyuréthannes, les polyesters, les polyéthers, les polyamides, les polyimides, les polyacrylates, les polyacrylamides, les poly(éthers vinyliques), les polyalkylènes, les polyalkylarylènes, les polyalkylène-amines, les polyalkylène-imines, les polyvinylamines, les polyallylamines et les polydiallylamines, les polyvinylpyridines, les polyaminotriazoles, les poly(alcools vinyliques), les aminopolyuréylènes et leurs mélanges.

3. Polymère selon la revendication 2, dans lequel le rapport des groupes M aux groupes anioniques X est de 1:2 à 100:1.

4. Polymère selon la revendication 3, dans lequel les motifs du polymère contenant des groupes M et L—X constituent de 50 à 100% du polymère.

5. Polymère selon la revendication 4, dans lequel les nombres des groupes M et L—X sont chacun de 3 à 40.

6. Polymère selon la revendication 4, dans lequel m et n sont des nombres tels que le groupement $—(CH_2CH_2O)_n—$ constitue au moins 85% en poids du groupement polyoxyalkylène.

7. Polymère selon la revendication 6, dans lequel m est nul et n est au moins égal à 12.

8. Polymère selon la revendication 7, dans lequel X est $OSO_3^-$ ou $SO_3^-$, ou un mélange de ceux-ci avec H.

9. Polymère selon la revendication 1, qui comprend des motifs de formules I, II et III:

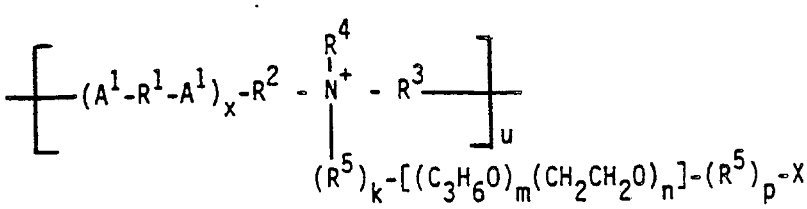

I

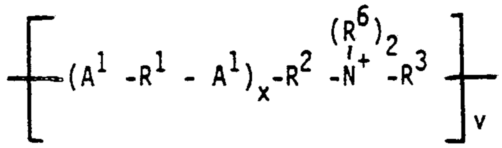

II

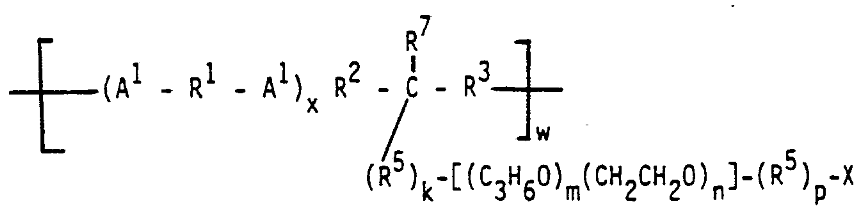

III

dans lesquelles $A^1$ est ou 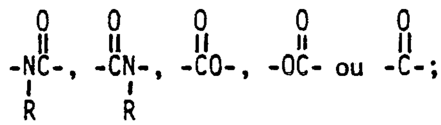

R est H ou un groupe alkyle ou hydroxyalkyle en $C_1$—$C_4$; $R^1$ est un groupe alkylène, hydroxyalkylène, alcénylène, cycloalkylène, arylène ou alkylarylène en $C_2$—$C_{12}$, ou un groupement oxyalkylène en $C_2$—$C_3$ comportant de 2 à 20 motifs oxyalkylène, à condition qu'aucune liaison O—O ou N—O ne se forme avec $A^1$; lorsque x est égal à 1, $R^2$ est —$R^5$—, sauf lorsque $A^1$ est

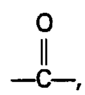

ou est —$(OR^8)_y$— ou —$OR^5$—, à condique qu'aucune liaison O—O ou N—O ne se forme avec $A^1$, et $R^3$ est $R^5$, sauf lorsque $A^1$ est

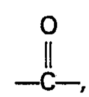

ou est —$(R^8O)_y$— ou —$R^5O$—, à condition qu'aucune liaison O—O ou O—N ne se forme avec $A^1$; lorsque x est nul, $R^2$ est

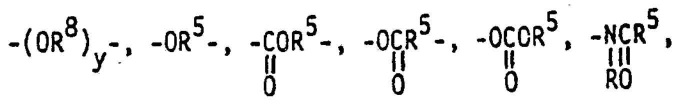

ou 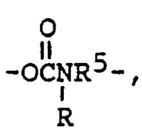, et $R^3$ est $-R^5-$;

$R^4$ est un groupe alkyle ou hydroxyalkyle en $C_1$—$C_4$, —$(R^8O)_q$—$R^9$, ou le groupement —$(R^5)_k$—$[(C_3H_6O)_m(CH_2CH_2O)_n]$—$(R^5)_p$—X; $R^5$ est un groupe alkylène, hydroxyalkylène, alcénylène, arylène ou alkylarylène en $C_1$—$C_{12}$; chaque $R^6$ est un groupe alkyle ou hydroxyalkyle en $C_1$—$C_4$, —$(R^8O)_q$—$R^9$, ou bien deux $R^6$ forment ensemble le groupement —$(CH_2)_r$—$A^2$—$(CH_2)_s$—, dans lequel $A^2$ est —O— ou —$CH_2$—; $R^7$ est H ou $R^4$; $R^8$ est un groupe alkylène ou hydroxyalkylène en $C_2$—$C_3$; $R^9$ est H,

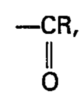

—R, ou un mélange de ceux-ci; X est $SO_3^-$, $OSO_3^-$ ou $CO_2^-$; k est nul ou égal à 1; m a une valeur de 0 à 5; n est au moins égal à 3; m et n sont des nombres tels que le groupement —$(CH_2CH_2O)_n$— constitue au moins

85% en poids du groupement $—[(C_3H_6O)_m(CH_2CH_2O)_n]$; p est égal à 1, ou est nul seulement lorsque X est $SO_3^-$; q a une valeur de 1 à 100; r est égal à 1 ou 2, s est égal à 1 ou 2 et r + s est égal à 3 ou 4; y a une valeur de 2 à 20; les nombres de u, de v et de w sont tels qu'il y ait au moins deux centres $N^+$ et au moins deux groupes X.

10. Polymère selon la revendication 9, dans lequel A' est

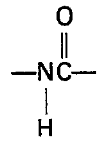

ou

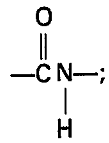

x est égal à 1; $R^1$ est un groupe alkylène en $C_2—C_6$; $R^2$ est $—(OR^8)_y—$ ou $OR^5—$; $R^3$ est $—(R^8O)_y—$ ou $—R^5O—$; $R^4$ et $R^6$ sont chacun des groupes méthyle ou $—(R^8O)_q—H$; $R^5$ est un groupe alkylène en $C_1—C_3$; $R^7$ est H ou un groupe alkyle en $C_1—C_3$; $R^8$ est un groupe éthylène; X est $SO_3^-$ ou $OSO_3^-$; k est nul; m a une valeur de 0 à 5; p est égal à 1; q a une valeur de 2 à 40; y a une valeur de 2 à 12.

11. Polymère selon la revendication 10, dans lequel v et w sont chacun nuls et u a une valuer de 3 à 40.

12. Polymère selon la revendication 11, dans lequel m est nul et n est au moins égal à 12.

13. Polymère selon la revendication 1, qui comprend des motifs de formules IV, V et VI:

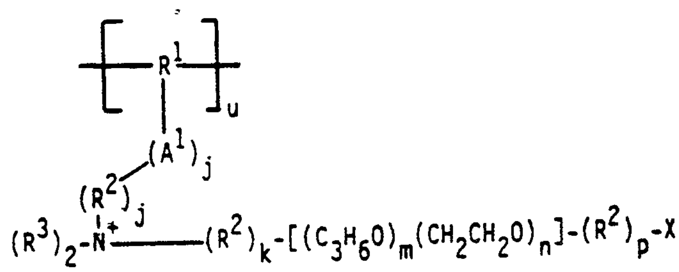

IV

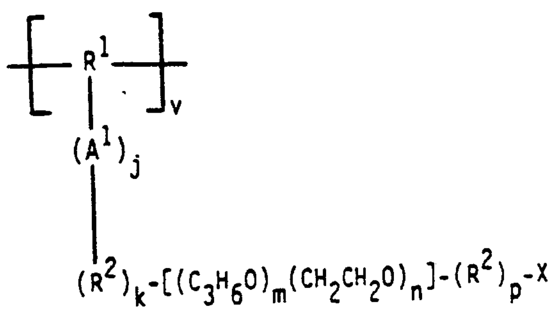

V

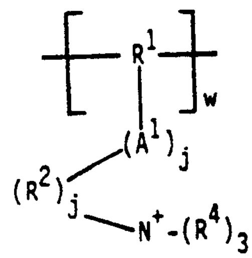

VI

dans lesquelles $A^1$ est

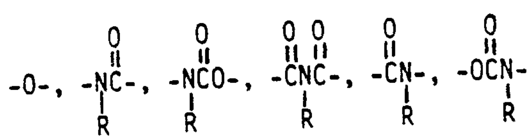

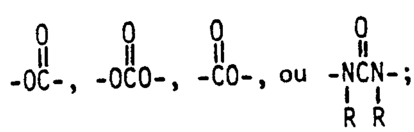

R est H ou un groupe alkyle ou hydroxyalkyle en $C_1—C_4$; $R^1$ est un groupe alkylène, hydroxyalkylène, alcénylène, arylène ou alkylarylène substitué en $C_2—C_{12}$, ou oxyalkylène substitué en $C_2—C_3$; chaque $R^2$ est un groupe alkylène, hydroxyalkylène, alcénylène, arylène ou alkylarylène en $C_1—C_{12}$; chaque $R^3$ est un groupe alkyle ou hydroxyalkyle en $C_1—C_4$, $—(R^5O)_q—R^6$, le groupement

$-(R^2)_k-[(C_3H_6O)_m(CH_2CH_2O)_n]-(R^2)_p-X$, ou deux $R^3$ forment ensemble le groupement $-(CH_2)_r-A^2-(CH_2)_s-$, dans lequel $A^2$ est $-O-$ ou $-CH_2-$; chaque $R^4$ est un groupe alkyle ou hydroxyalkyle en $C_1-C_4$, $-(R^5O)_q-R^6$, ou deux $R^4$ forment ensemble le groupement $-(CH_2)_r-A^2(CH_2)_s-$; $R^5$ est un groupe alkylène ou hydroxyalkylène en $C_2-C_3$; $R^6$ est H,

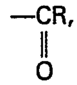

—R ou un mélange de ceux-ci; X est $SO_3^-$, $OSO_3^-$ ou $CO_2^-$; j est égal à 1 ou 0; k est égal à 1 ou 0; m a une valeur de 0 à 5; n est au moins égal à 3; n et m sont des nombres tels que le groupement $-(CH_2CH_2O)_n-$ constitue au moins 85% en poids du groupement $-[(C_3H_6O)_m(CH_2CH_2O)_n]-$; p est égal à 1, ou à 0 seulement lorsque X est $SO_3^-$; q a une valeur de 1 à 100; r est égal à 1 ou 2, s est égal à 1 ou 2 et r + s est égal à 3 ou 4; les nombres de u, de v et de w sont tels qu'il y ait au moins deux centres $N^+$ et au moins deux groupes X.

14. Polymère selon la revendication 13, dans lequel $A^1$ est

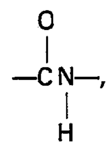

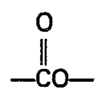 ou $-O-$;

$R^1$ est $-CH_2CH<$ ou

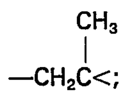

$R^2$ est un groupe alkylène en $C_2-C_3$; chaque $R^3$ et $R^4$ est un groupe méthyle ou $-(R^5O)_q-H$; $R^5$ est un éthylène; X est $SO_3^-$ ou $OSO_3^-$; j est égal à 1; k est nul; p est égal à 1; q a une valeur de 2 à 40.

15. Polymère selon la revendication 14, dans lequel v et w sont chacun nuls et u a une valeur de 3 à 40.

16. Polymère selon la revendication 15, dans lequel m est nul et n est au moins égal à 12.

17. Polymère selon la revendication 1, qui comprend des motifs de formules VII, VIII et IX:

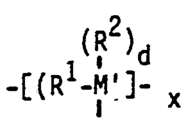 VII

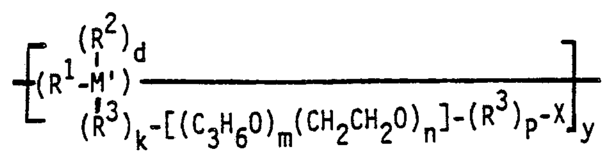 VIII

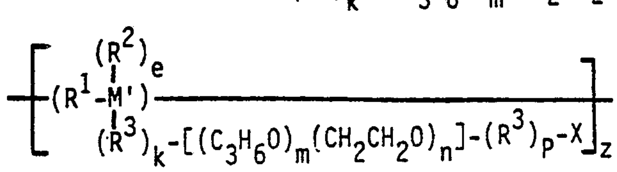 IX

dans lesquelles $R^1$ est un groupe alkylène, hydroxyalkylène, alcénylène, cycloalkylène, arylène ou alkylarylène en $C_2-C_{12}$, ou un groupement oxyalkylène en $C_2-C_3$ comportant de 2 à 20 motifs oxyalkylène, à condition qu'aucune liaison O—N ne soit formée; chaque $R^2$ est un groupe alkyle ou hydroxyalkyle en $C_1-C_4$, $-(R^4O)_q-R^5$, ou le groupement $-(R^3)_k-[(C_3H_6O)_m(CH_2CH_2O)_n]-(R^3)_p-X$; chaque $R^3$ est un groupe alkylène, hydroxyalkylène, alcénylène, arylène ou alkylarylène en $C_1-C_{12}$; $R^4$ est un groupe alkylène ou hydroxyalkylène en $C_2-C_3$; $R^5$ est H,

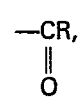

—R ou un de leurs mélanges, dans lesquels R est un groupe alkyle ou hydroxyalkyle en $C_1-C_4$; M' est un centre $N^+$ ou N; X est $SO_3^-$, ou $OSO_3^-$ ou $CO_2^-$ ou un de leurs mélanges avec H; d est égal à 1 lorsque M' est $N^+$ et est nul lorsque M' est N; e est égal à 2 lorsque M' est $N^+$ et est nul lorsque M' est N; k est égal à 1 ou 0; m a une valeur de 0 à 5; n est au moins égal à 3; m et n sont des nombres tels que le groupement $-(CH_2CH_2O)_n-$ constitue au moins 85% en poids du groupement $-[(C_3H_6O)_m(CH_2CH_2O)_n]-$; p est égal à 1; ou à 0 seulement lorsque X est $SO_3^-$ ou H; q a une valeur de 1 à 100; les nombres de x, de y et de z sont

tels qu'il y ait au moins 10 groupes M', au moins deux centres $N^+$ et au moins deux groupes X.

18. Polymère selon la revendication 17, dans lequel $R^1$ est un groupe alkylène en $C_2$—$C_3$; chaque $R^2$ est un groupe méthyle ou —$(R^5O)_q$—H; chaque $R^3$ est un groupe alkylène en $C_1$—$C_3$; $R^4$ est un groupe éthylène; X est $SO_3^-$ ou un mélange de celui-ci avec H; k est nul; p est nul; q a une valeur de 2 à 40.

19. Polymère selon la revendication 18, dans lequel $R^1$ est un groupe éthylène.

20. Polymère selon la revendication 19, dans lequel x + y + z a une valeur de 10 à 42.

21. Polymère selon la revendication 20, dans lequel m est nul et n est au moins égal à 12.

22. Polymère selon la revendication 1, qui comprend des motifs de formules X et XI:

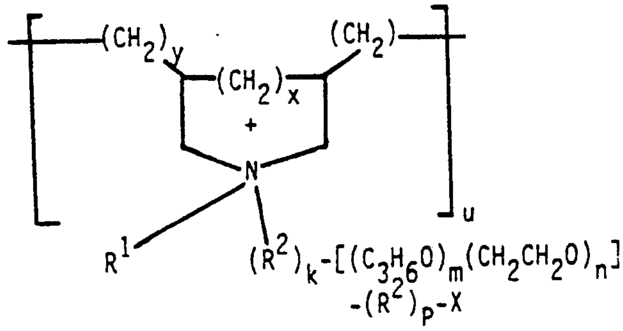

X

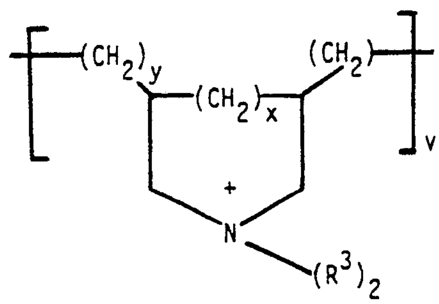

XI

dans lesquelles $R^1$ est un groupe alkyle ou hydroxyalkyle en $C_1$—$C_4$, —$(R^4O)_q$—$R^5$, ou le groupement —$(R^2)_k$—$[(C_3H_6O)_m(CH_2CH_2O)_n]$—$(R^2)_p$—X; chaque $R^2$ est un groupe alkylène, hydroxyalkylène, alcénylène, arylène ou alkylarylène en $C_1$—$C_{12}$; chaque $R^3$ est un groupe alkyle ou hydroxyalkyle en $C_1$—$C_4$, —$(R^4O)_q$—$R^5$, ou deux $R^3$ forment ensemble le groupement $(CH_2)_r$—A—$(CH_2)_s$, dans lequel A est —O— ou —$CH_2$—; $R^4$ est un groupe alkylène ou hydroxyalkylène en $C_2$—$C_3$; $R^5$ est H,

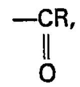

—R ou un mélange de ceux-ci, où R est un groupe alkyle ou hydroxyalkyle en $C_1$—$C_4$; X est $SO_3^-$, $OSO_3^-$ ou $CO_2^-$ ou un mélange de ceux-ci avec H; k est égal à 1 ou 0; m a une valeur de 0 à 5; n est au moins égal à 3; m et n sont des nombres tels que le groupement —$(CH_2CH_2O)_n$— constitue au moins 85% en poids du groupement —$[(C_3H_6O)_m(CH_2CH_2O)_n]$—; p est égal à 1, ou est nul seulement lorsque X est $SO_3^-$ ou H; q a une valeur de 1 à 100; r est égal à 1 ou 2, s est égal à 1 ou 2 et r + s est égal à 3 ou 4; x est égal à 1 ou 0; y est égal à 1 lorsque x est nul et à 0 lorsque x est égal à 1; les nombres de u et de v sont tels que le nombre de centres $N^+$ soit au moins égal à 2 et que le nombre de groupes X soit au moins égal à 2.

23. Polymère selon la revendication 22, dans lequel $R^1$ est un groupe méthyle ou —$(R^4O)_q$—H; $R^2$ est un groupe alkylène en $C_2$—$C_3$; $R^3$ est un groupe méthyle ou —$(R^4O)_q$—H; $R^4$ est un groupe éthylène; X est $SO_3^-$ ou un mélange de celui-ci avec H; k est nul; p est nul; q a une valeur de 2 à 40.

24. Polymère selon la revendication 23, dans lequel v est nul et u a une valeur de 3 à 40.

25. Polymère selon la revendication 24, dans lequel m est nul et n est au moins égal à 12.

26. Composition détergente, qui comprend:

(a) de 1 à 75% en poids d'un tensioactif détergent non ionique, ampholyte, zwittérionique ou cationique ou d'un mélange de ceux-ci; et

(b) de 0,05 à 95% en poids d'un polymère zwittérionique soluble dans l'eau ayant des propriétés d'élimination des salissures argileuses et d'antiredéposition, qui comprend un squelette de polymère, au moins deux groupes M et au moins un groupe L—X, où M est un groupe cationique fixé au squelette ou faisant partie de ce squelette et contient un centre $N^+$ chargé positivement; X est un groupe anionique ou un mélange de groupes anioniques et non ioniques; et L est un chaîne hydrophile reliant les groupes M et X ou reliant X au squelette de polymère; L contient aussi le groupement polyoxyalkylène —$[(R'O)_m(CH_2CH_2O)_n]$—, dans lequel R' est un groupe alkylène ou hydroxyalkylène en $C_3$—$C_4$, m et n sont des nombres tels que le groupement —$(CH_2CH_2O)_n$— constitue au moins 50% en poids du groupement polyoxyalkylène, et n est au moins égal à 3.

27. Composition selon la revendication 26, qui comprend de 0,1 à 10% en poids des polymères zwittérioniques.

28. Composition selon la revendication 27, qui comprend de 1 à 3% en poids des polymères zwittérioniques.

29. Composition selon la revendication 28, dans laquelle le tensioactif détergent est choisi dans le groupe constitué par les tensioactifs non ioniques, les tensioactifs anioniques ou leurs mélanges.

30. Composition selon la revendication 29, qui comprend en outre de 0 à 80% en poids d'un adjuvant de détergence.

31. Composition selon la revendication 26, dans laquelle le squelette est choisi dans le groupe constitué par les polyuréthannes, les polyesters, les polyéthers, les polyamides, les polyimides, les polyacrylates, les polyacrylamides, les poly(éthers vinyliques), les polyalkylènes, les polyalkylarylènes, les polyalkylène-imines, les polyvinylamines, les polyallylamines et les polydiallylamines, les polyvinylpyridines, les polyaminotriazoles, les poly(alcool vinylique) et leurs mélanges.

32. Composition selon la revendication 31, dans laquelle le rapport des groupes M aux groupes anioniques X est de 1:1 à 50:1.

33. Composition selon la revendication 32, dans laquelle les motifs du polymère contenant des groupes M et L—X constituent de 50 à 100% du polymère.

34. Composition selon la revendication 33, dans laquelle les nombres des groupes M et L—X sont chacun de 3 à 40.

35. Composition selon la revendication 33, dans laquelle m et n sont des nombres tels que le groupement $-(CH_2CH_2O)_n-$ constitue au moins 85% en poids du groupement polyoxyalkylène.

36. Composition selon la revendication 35, dans laquelle m est nul et n est au moins égal à 12.

37. Composition selon la revendication 36, dans laquelle X est $OSO_3^-$ ou $SO_3^-$, ou un mélange de ceux-ci avec H.